# EUROPÄISCHE PATENTSCHRIFT

(11) **EP 2 868 201 B1**
(45) Veröffentlichungstag und Bekanntmachung des Hinweises auf die Patenterteilung: **05.09.2018**
(21) Anmeldenummer: 13190910.3
(22) Anmeldetag: 30.10.2013
(51) Int. Cl.: A21C 15/00, A21D 13/00

(54) **Verfahren und Anlage zur Herstellung gefüllter Sandwiches**
Method and system for making filled sandwiches
Procédé et installation de fabrication de sandwiches garnis

(43) Veröffentlichungstag der Anmeldung: 06.05.2015
(73) Patentinhaber: Hammerschmid Maschinenbau Gmbh, 4190 Bad Leonfelden (AT)
(72) Erfinder: Reingruber, Martin, A-4191 Vorderweissenbach (AT)
(74) Vertreter: Kaminski Harmann

(56) Entgegenhaltungen:
- EP-A1- 1 057 757
- EP-A2- 1 747 724
- EP-B1- 1 130 971
- US-A- 2 463 439
- US-A- 3 645 197
- US-A1- 2011 030 566

## Beschreibung

Die vorliegende Anmeldung bezieht sich auf die Herstellung gefüllter Sandwiches, sowie auf eine Anlage zur Herstellung solcher gefüllter Sandwiches.

Unter dem Begriff gefülltes Sandwich sollen im Folgenden alle Arten von belegten Broten verstanden werden, die zwei in etwa parallel zueinander angeordnete Brotscheiben (im Folgenden Sandwichscheiben genannt) und dazwischen wenigstens eine wertbestimmende Zutat aufweisen, unabhängig davon welche Art von Brot für deren Herstellung verwendet wird, ob Mischbrot, Weissbrot, Roggenbrot, Toastbrot etc. und unabhängig davon ob die Brotscheiben vorgeröstet, geröstet oder ungeröstet, der Inhalt kalt, warm oder heiss verarbeitet und/oder verzehrt werden soll.

Für die industrielle Herstellung solcher gefüllter Sandwiches ist es bekannt, dass die Sandwichscheiben von Hand auf ein Förderband gelegt und für die weitere Verarbeitung passend ausgerichtet werden.

Für die Aufbereitung von in Scheiben aufzulegenden, wertbestimmenden Zutat, wie Käsescheiben, Wurst-, Schinken, oder Leberkässcheiben etc., sind sogenannte automatische Slicer bekannt. Die automatischen Slicer schneiden von einem Lebensmittel, wie Käse, Wurst, Schinken, Leberkäse, Gurken etc., das in Form eines Blockes, einer Stange oder Wurst vorliegt, automatisch Scheiben ab, die für die industrielle Herstellung von gefüllten Sandwiches beispielsweise mittels eines Förderbands und allenfalls zur Gewichtskontrolle über eine Waage dem Förderband mit den Sandwichscheiben zugeführt werden. Wo das Förderband mit den scheibenförmigen Zutaten auf das Förderband mit den Sandwichscheiben trifft werden die scheibenförmigen Zutaten auf die Sandwichscheiben gelegt, was in der Regel von Hand geschieht. Anschliessend wird auf jede mit einer Zutatenscheibe belegte erste Sandwichscheibe mit einer zweiten Sandwichscheibe belegt, wobei die Form der Sandwichscheiben, die aufeinander gelegt werden, vorzugsweise einander ähneln und die Ausrichtung der Sandwichscheiben gleich ist.

Es versteht sich, dass weitere scheibenförmige Zutaten auch in Form von Gurkenscheiben, Tomatenschieben, Eischeiben etc. sowie körnige, flüssige oder pastöse Zutaten (Gewürze, Saucen, Meerrettich, Senf, Butter in cremiger Form etc.), zwischen die Sandwichscheiben eingebracht werden können. Scheibenförmige und körnige Zutaten werden dabei mit Vorteil auf die jeweils erste Sandwichscheibe aufgebracht, während flüssige oder pastöse Zutaten, je nach Menge unter Umständen auch auf die zweite Sandwichscheibe aufgebracht werden können, ehe diese mit ihrer die pastöse bzw. flüssige Zutat aufweisenden Seite dann auf die erste Sandwichscheibe gelegt wird.

Für das Aufbringen von körnigen, flüssigen oder pastösen Zutaten sind Portionierautomaten bekannt, welche die Zutat in vorbestimmter Menge z.B. über Spritzdüsen, mehr oder weniger fein verteilt auf die Sandwichscheiben verteilen. Hierzu werden die Sandwichscheiben in der Regel auf einem Förderband unter den Spritzdüsen hindurch geführt, wobei die Anzahl der Scheiben auf dem Förderband und deren Ausrichtung auf die Anordnung und Anzahl der Spritzdüsen abgestimmt ist ebenso wie die Fördergeschwindigkeit auf den Spritzvorgang abgestimmt ist.

Aus der industriellen Lebensmittelfertigung sind weiter Tunnelöfen für das Rösten bzw. erhitzen von Lebensmitteln bekannt, wobei die entsprechenden Lebensmittel entweder abgelegt auf den Ablagefächern großer, durch den Tunnelofen förderbarer Regalgestelle oder abgelegt auf einem Förderband durch den Tunnelofen transportiert werden.

Ebenfalls aus der industriellen Lebensmittelfertigung sind Schockgefrierer bekannt, in welchen die Lebensmittel tiefgefroren werden können, sowie Verpackungsanlagen, in denen die Lebensmittel z.B. vakuumverschweisst und/oder in Kartons verpackt werden können. Auch Palettieranlagen mittels derer die Lebensmittel in ihrer Folien und/oder Kartonverpackung schliesslich palettiert, d.h. auf Paletten verpackt werden können sind hier bekannt.

Für den Hausgebrauch ist des Weiteren z.B. aus EP 1 130 971 B1 eine Vorrichtung und ein Verfahren zur Herstellung von vorgerösteten gefüllten Toasts bekannt. Die gefüllten Toasts werden aus zwei Toastscheiben hergestellt, welche unter Hitze und Druck an ihrem Rand miteinander verpresst werden, so dass die Füllung nicht nach außen gelangt. Die Vorrichtung zum Herstellen umfasst zwei Pfannenteile, wovon wenigstens ein Pfannenteil einen gegenüber der Pfannengrundfläche erhöhten Rahmen aufweist, der in seinen Abmessungen etwa den Randbereich einer Toastscheibe entspricht, so dass sich für den Bereich der Füllung eine Vertiefung ergibt und der Randbereich der aufeinander liegenden Toastscheiben beim Zusammenpressen der Pfannenteile stärker zusammengepresst wird als der vom Rahmen eingefasste Teil, in welchem sich die Füllung zwischen den Toastscheiben befindet. Ein auf diese Weise unter Hitze und Druck erzeugter vorgerösteter Toast soll dann, bei Bedarf in einem Toaster heiß gemacht und verzehrt werden. Wichtig ist dabei, dass beim Toasten im Toaster nichts von seiner Füllung nach außen gelangt, da dies zu einer Brandgefahr führen könnte und auch den Toaster verschmutzen und ernsthaft beschädigen könnte.

Zu dem gleichen Zweck zeigt US 6,231,898 eine ganz ähnliche Vorrichtung zum Hausgebrauch nur dass hier die Toastscheiben an ihren Rändern rings um die Füllung herum mit Gelatine als Klebemittel bestrichen und nur durch Druck miteinander verbunden werden. Der gefüllte Toast ist somit nicht vorgeröstet, soll aber ebenso wie derjenige aus EP 1 130 971 B1 durch Toasten in einem Toaster zum Verzehr heiß gemacht und geröstet werden.

Wie oben beschrieben ist die industrielle Herstellung von gefüllten Sandwiches noch mit viel Handarbeit verbunden und somit zeit- und kostenintensiv. Die vorliegende Erfindung soll hier Abhilfe schaffen. Die US 3,645,197 beschreibt eine Anlage und ein korrespondierendes Verfahren zur industriellen Herstellung gefüllter Sandwiches. Zwei Reihen vereinzelter Sandwichscheiben werden auf zwei parallelen Förderbändern gefördert. Die Förderbänder werden von Magazinen mit den Sandwichscheiben bestückt. Die Sandwichscheiben werden ausgerichtet, mit einer wertbestimmenden Zutat versehen und zusammengeklappt. Das erfindungsgemäße Verfahren zur industriellen Herstellung gefüllter Sandwiches umfassend zwei Sandwichscheiben und wenigstens eine wertbestimmende Zutat, umfasst wenigstens folgende Schritte:
Sandwichscheiben vereinzeln und auf ein Förderband auflegen; unbrauchbare Sandwichscheiben aussortieren und übrige Sandwichscheiben für eine Weiterverarbeitung ausrichten; jede erste Sandwichscheibe mit wenigstens einer scheibenförmigen, körnigen, pastösen oder flüssigen Zutat versehen und auf jede erste, mit wenigstens einer Zutat versehene Sandwichscheibe eine zweite Sandwichscheibe auflegen. Auf dies Weise erhält man ein Sandwich, wie es oben beschrieben ist mit zwei einander gegenüberliegenden Sandwichscheiben und wenigstens einer wertbestimmenden Zutat dazwischen. Um das Verfahren zu Beschleunigen und zu Vereinfachen wird nun erfindungsgemäß zum Aussortieren und Ausrichten der Sandwichscheiben das Förderband so durchleuchtet, dass das Licht, welches das Förderband durchdringt, von optischen Detektoren erfasst wird. Die optischen Detektoren erkennen über Helligkeitsunterschiede und/oder Farbunterschiede und deren örtliche Verteilung unbrauchbare Sandwichscheiben und Sandwichscheiben ähnlicher Geometrie. Außerdem kann die Position der Sandwichscheiben auf dem Förderband bestimmt werden. Aufgrund der Information über Art und Position der Sandwichscheiben kann wenigstens ein Greifer so gesteuert werden, dass er die unbrauchbaren Sandwichscheiben aussortiert und jeweils zwei Sandwichscheiben ähnlicher Geometrie paarweise einander zugeordnet auf einem Förderband ablegt.

Sandwichscheiben mit sehr dünnen Wänden oder mit Löchern oder anderen Fehlern werden auf diese Weise erkannt und aussortiert und gar nicht für die Herstellung eines gefüllten Sandwiches verwendet. Auf diese Weise lassen sich ohne Risiko auch Sandwiches mit pastösen oder flüssigen Zutaten zusammenstellen, ohne dass man befürchten muss, dass diese Zutaten aufgrund von Fehlern in den Scheiben über die Sandwichscheiben selbst unbeabsichtigt nach aussen treten.

In einer weiterentwickelten Ausführungsform des Verfahrens wird das Ablegen auf dem Förderband und die paarweise Zuordnung von einander geometrisch ähnlichen Sandwichscheiben derart durchgeführt, dass bei einem Umklappen der jeweils zweiten Sandwichscheibe um 180° und Auflegen derselben auf die jeweils zugeordnete erste Sandwichscheibe beide Sandwichscheiben geometrisch etwa deckungsgleich aufeinander zu liegen kommen. Die Achse um welche die jeweils zweiten Sandwichscheiben um 180° umgeklappt werden ist dabei eine schmale Stirnseite der zweiten Sandwichscheibe. Vorzugsweise jene schmale Stirnseite, die der zugeordneten ersten Sandwichscheibe benachbart ist.

In einer anderen Ausführungsform des Verfahrens erfolgt das Umklappen Ablegen um 180° und Auflegen einer jeweils zweiten Sandwichscheibe auf einer jeweils zugeordneten ersten Sandwichscheibe indem die jeweils zweite Sandwichscheibe mittels Unterdruck an einem Ansaugstutzen eines mit Unterdruck beaufschlagbaren Umwerfers festgesaugt und zunächst vom Förderband weg bewegt wird, wobei der Umwerfer eine Schwenkbewegung von etwa 180° ausführt. Je nach Beschaffenheit der Sandwichscheiben und der aufgebrachten Zutat(en) kann auch eine Schwenkbewegung des Umwerfers im Bereich von 140° bis 200° sinnvoll sein. Die zweite Sandwichscheibe wird am Ende der Schwenkbewegung wieder auf das Förderband zu und auf die auf dem Förderband transportierte, zugeordnete erste Sandwichscheibe hin bewegt. Durch Aufhebung des Unterdrucks wird sie schliesslich auf der besagten ersten Sandwichscheibe abgelegt. Es versteht sich, dass das Ansaugen der zweiten Sandwichscheibe, das Verschwenken des Umwerfers und die Aufhebung des Unterdrucks in ihrer Geschwindigkeit mit der Fördergeschwindigkeit des Förderbandes abgestimmt ist, damit die Scheiben schliesslich, was ihre geometrische Form anbelangt, in etwa fluchtend aufeinander zu liegen kommen.

In einer weiteren Ausführungsform werden die Sandwichscheiben, nachdem sie zu einem Sandwich der oben genannten Art zusammengefügt wurden, in ihren Randbereichen durch Aufbringen von Druck und Hitze miteinander fest und flüssigkeitsdicht verbunden werden, wobei als Randbereich hier jener Bereich verstanden wird, der jenen mit wenigstens einen Zutat versehenen zentralen Bereich eines Sandwiches umgibt. Auf diese Weise erhält man ein vorgeröstetes, gefülltes Sandwich, das sich insbesondere dafür eignet vor dem Verzehr erhitzt zu werden, ohne dass Zutaten von innen aus dem Sandwich austreten können. Insbesondere eignen sich diese Sandwiches auch um vor dem verzehr in einem herkömmlichen Toaster aufrecht stehend getoastet und auf diese Weise erhitzt zu werden. Dabei wird die Dichtigkeit des vorgerösteten, gefüllten Sandwiches nicht nur durch die feste Verbindung der Sandwichscheiben gewährleistet sondern auch dadurch, dass mittels der optischen Erkennung unbrauchbarer Sandwichscheiben, solche Sandwichscheiben mit sehr dünnen Wänden oder mit Löchern oder anderen Fehlern aussortiert und gar nicht für die Herstellung des vorgerösteten, gefüllten Sandwiches verwendet werden.

Bei diesem Verfahrensschritt werden Druck und Temperatur für weniger als 40s aufgebracht. Je nach Konsistenz, Alter, Feuchtigkeit, der Sandwichscheiben und Beschaffenheit der Zutat(en) und abhängig von den Werten für Druck und Temperatur, können Druck und Temperatur insbesondere auch für 10s bis 20s und vorzugsweise für 15s bis 16s aufgebracht werden.

Der Druck liegt vorzugsweise zwischen 10kg/cm2 und 40kg/cm2 insbesondere in einem Bereich von 20kg/cm2 bis 30kg/cm2.

Die Temperatur liegt im Bereich von 160°C bis 220°C, insbesondere im Bereich von 180°C bis 200°C.

Auch diese Parameter hängen voneinander sowie von der Beschaffenheit der Sandwichscheiben und Beschaffenheit der Zutat(en) ab und beeinflussen sich also gegenseitig. Durch eine entsprechende Software lassen sich die Parameter Druck, Temperatur und Anwendungsdauer abhängig von der Beschaffenheit der Sandwichscheiben und der Zutat(en) optimieren.

Besonders vorteilhaft ist es, wenn im Randbereiche zwei zueinander beabstandete umlaufende Linien mit höherem Druck beaufschlagt werden, so dass sich im verbundenen Randbereich zwei nebeneinander um den zentralen Bereich des Sandwiches umlaufende Linien festerer Verbindung und höherer Dichte ergeben. Diese Linien wirken dann ähnlich wie Dichtlippen und verhindern bei einem erneuten erhitzen des vorgerösteten, gefüllten Sandwiches, dass Zutaten austreten.

Eine noch bessere Verbindung zwischen den Sandwichscheiben kann erreicht werden, wenn vor dem Aufbringen von Druck und Hitze auf den Randbereichen die ersten und zweiten Sandwichscheiben jeweils auf jener Seite, die im fertigen Sandwich ins Sandwichinnere ausgerichtet ist, jeweils im Bereich ihrer Ränder mit einem lebensmittelkonformen Bindemittel versehen werden. Das lebensmittelkonforme Bindemittel ist vorzugsweise ein Eiweiss, welches in Form einer wässrigen Eiweisslösung entlang der Randbereiche aufgesprüht wird.

Um ästhetisch anspruchsvolle und gut verpackbare vorgeröstete, gefüllte Sandwichscheibe zu erhalten kann als weiterer Verarbeitungsschritt vorgesehen sein, dass äußerste, unsaubere Ränder eines vorgerösteten, gefüllten Sandwiches abgetrennt werden, so dass ein versäubertes, vorgeröstetes, gefülltes Sandwich resultiert. Auf sehr einfache Weise kann das Abtrennen durch Stanzen erfolgen.

Das Verbinden der Sandwichscheiben mittels Hitze und Druck und ein optionales Abtrennen äußerster, unsauberer Ränder erfolgt getaktet, während vorgängige Arbeitsschritte in kontinuierlichem Verfahren durchgeführt werden. Um einen Reibungslosen Ablauf des Verfahrens zu gewährleisten, ist vorteilhafterweise vorgesehen, dass die Sandwiches für die getakteten Arbeitschritte vom Förderband weg in Gruppen zusammengefasst werden und von Manipulatoren übernommen werden und den getaktet arbeitenden Arbeitsstationen im Takt zugeführt bzw. von diesen wegtransportiert werden.

Besonders vorteilhaft ist somit ein vorgeröstetes, gefülltes Sandwich, dass mit dem oben beschriebenen Verfahren besonders zeit und kostengünstig und mit hoher Qualität herstellbar ist.

Ein solches Sandwich weist besonders vorteilhaft in seinem die erste Sandwichscheibe mit der zweiten Sandwichscheibe verbindenden Randbereich zwei nebeneinander um den einen zentralen mit wenigstens einer wertbestimmenden Zutat versehenen Bereich des Sandwiches umlaufende Linien festerer Verbindung und höherer Dichtigkeit auf.

Die Anlage zur Durchführung des Verfahrens und zur Herstellung solcher Sandwiches ist im Folgenden anhand der in den Figuren dargestellten schematischen Beispiele näher erläutert. Ebenso wird das verfahren in seinen Einzelheiten anhand der in den Figuren dargestellten schematischen Beispiele näher erklärt.

Die Erläuterungen erfolgen nur beispielhaft und haben keine beschränkende Wirkung. Gleiche Elemente in den Figuren sind mit gleichen Bezugszeichen gekennzeichnet. Die Figuren zeigen beispielhaft und rein schematisch:
- Fig.1a und 1b: eine Anlage bzw. ein Verfahren zur Herstellung von gefüllten Sandwiches gemäß Stand der Technik;
- Fig.2a: erste Varianten einer Ausführungsform einer erfindungsgemäßen Anlage bzw. eines erfindungsgemäßen Verfahrens zur Herstellung von gefüllten Sandwiches;
- Fig.3a bis 3c: eine Ausführungsform einer erfindungsgemäßen Sortier- und Ausrichtestation einer erfindungsgemäßen Anlage bzw. des erfindungsgemäßen Verfahrens zur Herstellung von gefüllten Sandwiches;
- Fig.4a bis 4c: Ausführungsform einer erfindungsgemäßen Zusammenklappstation einer erfindungsgemäßen Anlage bzw. des erfindungsgemäßen Verfahrens zur Herstellung von gefüllten Sandwiches;
- Fig.5a bis: 5c eine weitere Ausführungsform einer erfindungsgemäßen Anlage bzw. eines erfindungsgemäßen Verfahrens zur Herstellung von gefüllten Sandwiches;
- Fig. 6: eine Ausführungsform einer Sprühstation einer erfindungsgemäßen Anlage bzw. eines erfindungsgemäßen Verfahrens zur Herstellung von gefüllten Sandwiches;
- Fig. 7a, 7b: verschiedene Ansichten von Teilen einer Ausführungsform einer erfindungsgemäßen Druckröststation einer erfindungsgemäßen Anlage bzw. eines erfindungsgemäßen Verfahrens zur Herstellung von gefüllten Sandwiches; und
- Fig. 8 und 9: verschiedene Ansichten von Teilen einer Ausführungsform eines erfindungsgemäßen Manipulators einer erfindungsgemäßen Anlage bzw. eines erfindungsgemäßen Verfahrens zur Herstellung von gefüllten Sandwiches

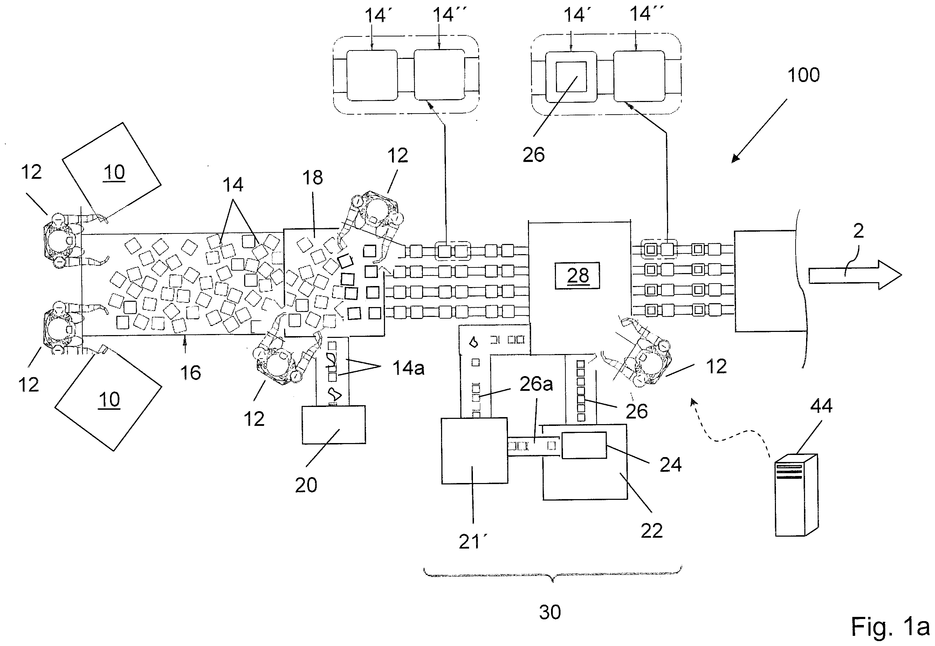

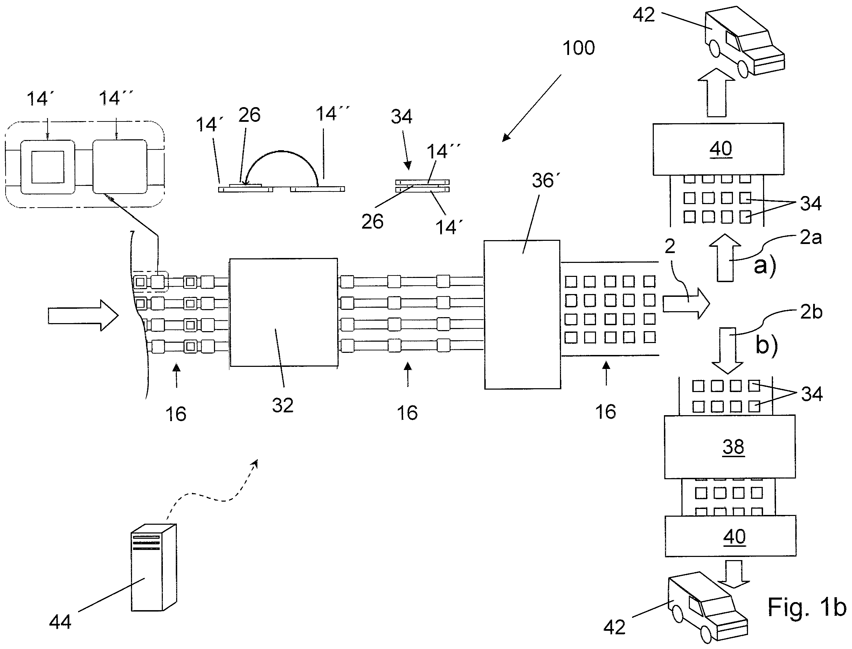

In den Fig. 1a und 1b ist eine Anlage 1 bzw. ein Verfahren zur industriellen Herstellung von gefüllten Sandwiches gemäß Stand der Technik dargestellt. Aus Magazinen 10 (vgl. Fig. 1a) nehmen Mitarbeiter 12 Sandwichscheiben 14, vereinzeln diese und legen sie auf ein Förderband 16. An einer Aussortier- und Richtestation 18 werden unbrauchbare Sandwichscheiben 14a aussortiert und in einen Reststoffcontainer 20 befördert. Die brauchbaren Sandwichscheiben 14 werden ausgerichtet und paarweise einander zugeordnet, wobei vorzugsweise immer eine erste Sandwichscheibe 14' und eine zweite Sandwichscheibe 14", die einander in Ihrer Geometrie ähneln, einander zugeordnet werden. Aufgrund der Komplexität der zu berücksichtigenden Kriterien werden beide Arbeiten üblicherweise durch Mitarbeiter 12 ausgeführt. Die paarweise einander zugeordneten und ausgerichteten Sandwichscheiben 14 werden mittels Förderband 16 weitertransportiert.

Dem Förderband 16 mit den Sandwichscheiben 14 ist eine Zutatenstation 30 zugeordnet, welche einen sogenannten Slicer 22 und für eine erste Qualitätskontrolle vorzugsweise eine Waage 24 umfasst. In dem Slicer werden von einem Block einer Stange oder Wurst Scheiben einer ersten wertbestimmende Zutat 26 abgeschnitten. Unbrauchbare Zutaten-Scheiben 26a, die der Qualitätskontrolle mittels Waage oder Augenschein durch einen Mitarbeiter 12 nicht entsprechen werden in einen Reststoffcontainer 20' abgeführt. Zutaten-Scheiben 26, welche den Qualitätsansprüchen genügen werden dem Förderband 16 mit den Sandwichscheiben 14 zugeführt, wo sie entweder durch einen Mitarbeiter 12 oder durch einen Roboter 28 auf, in diesem Beispiel die jeweils erste Sandwichscheibe 14' aufgelegt werden. In dem hier gezeigten Beispiel ist zwecks grösserer Übersichtlichkeit nur eine Zutatenstation 30 abgebildet. Es versteht sich aber, dass neben dieser Zutatenstation 30 weitere Zutatenstationen vorgesehen sein können, mittels derer weitere Zutaten bereitgestellt und den Sandwichscheiben zugeführt werden können. Dabei muss es sich nicht nur um scheibenförmige Zutaten handeln sondern es können durch entsprechende Sprüh- bzw. Streuvorrichtungen auch körnige (Gewürze), pastöse (Meerrettich, Senf etc.) oder flüssige Zutaten (Saucen, Essig etc.) zugeführt werden. In einer solchen weiteren Zutatenstation können auch auf die zweiten Sandwichscheibe 14" Zutaten aufgebracht werde, wobei diese aber an der zweiten Sandwichscheibe haften müssen, damit diese Zutaten zusammen mit der zweiten Sandwichscheibe 14" um 180° umgeklappt und die zweite Sandwichscheibe 14" mit ihrer die Zutat tragenden Seite auf die erste Sandwichscheibe 14' aufgelegt werden kann. Aus diesem Grund eignen sich hierfür am ehesten wohl pastöse Zutaten um auf die zweite Sandwichscheibe 14" aufgebracht zu werden.

In einer weiteren Station (vgl. Fig. 1b), hier als Zusammenklapp-Station 32 bezeichnet, wird die jeweils zweite Sandwichscheibe 14" um 180° umgeklappt und auf die erste Sandwichscheibe 14' gelegt, auf welcher sich die Zutat 26 und allenfalls weitere Zutaten (nicht dargestellt) befinden. Auch das Zusammenklappen erfolgt in der Regel durch Mitarbeiter 12. Das entstandene Sandwich 34 umfasst zwei etwa parallel zueinander angeordnete Sandwichscheiben 14', 14" und dazwischen wenigstens eine wertbestimmende Zutat 26.

Für die weitere Verarbeitung kann der Zusammenklapp-Station 32 eine Ordnungsstation 35 nachgeordnet sein, welche die Sandwiches 34 auf dem Förderband 16 entsprechend den Anforderungen der nachfolgenden Stationen anordnet. Dieses Ordnen erfolgt meist kulissengesteuert.

Als Möglichkeiten der weiteren Stationen sind in Fig. 1b unter Alternative a) eine Verpackungsstation 40 und der Abtransport 42 der verpackten Sandwiches dargestellt. Die Verpackungsstation kann dabei verschiedene Vorrichtungen umfassen, wie beispielsweise eine Vorrichtung zum Vakuumverschweissen und/oder eine Vorrichtung um ein oder mehrere Sandwiches in einen Karton zu verpacken, und/oder eine Vorrichtung zum Palettieren. In Alternative b) ist der Verpackungsstation 40 eine Tiefkühlstation 38 vorgeschaltet. Tiefkühlstation 38 und Verpackungsstation 40 (mit Ausnahme der Palettierung) können bekanntermassen kontinuierlich mittels Förderband beschickt und entleert werden. Die Steuerung der Anlage inklusiver der Abstimmung der Fördergeschwindigkeit des Förderbands 16 auf die jeweiligen Bedürfnisse erfolgt mittels einer Auswerte- und Steuereinheit 44, wobei die Signalübermittlung von oder zu der Auswerte- und Steuereinheit 44 in den Figuren jeweils durch einen gestrichelten Pfeil angedeutet ist.

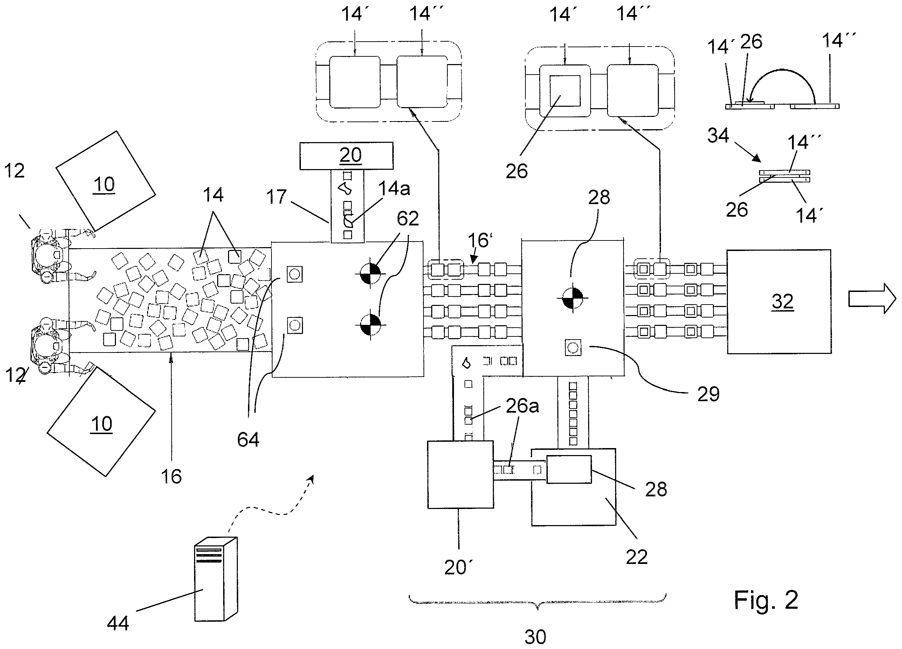

In den Fig. 2a und 2b ist eine erste Ausführungsform einer erfindungsgemäßen Anlage bzw. eines erfindungsgemäßen Verfahrens zur Herstellung von gefüllten Sandwiches gezeigt.

Wiederum werden die Sandwichscheiben 14 von Mitarbeitern 12 aus Magazinen 10 genommen, vereinzelt und auf ein Förderband 16 gelegt. Statt dass aber ein Aussortieren von unbrauchbaren Sandwichscheiben 14a und ein paarweises Ausrichten von brauchbaren, einander geometrisch ähnlichen Sandwichscheiben 14 händisch durch Mitarbeiter 12 erfolgt, ist hier eine vollautomatische Sortier- und Ausrichtestation 60 vorgesehen.

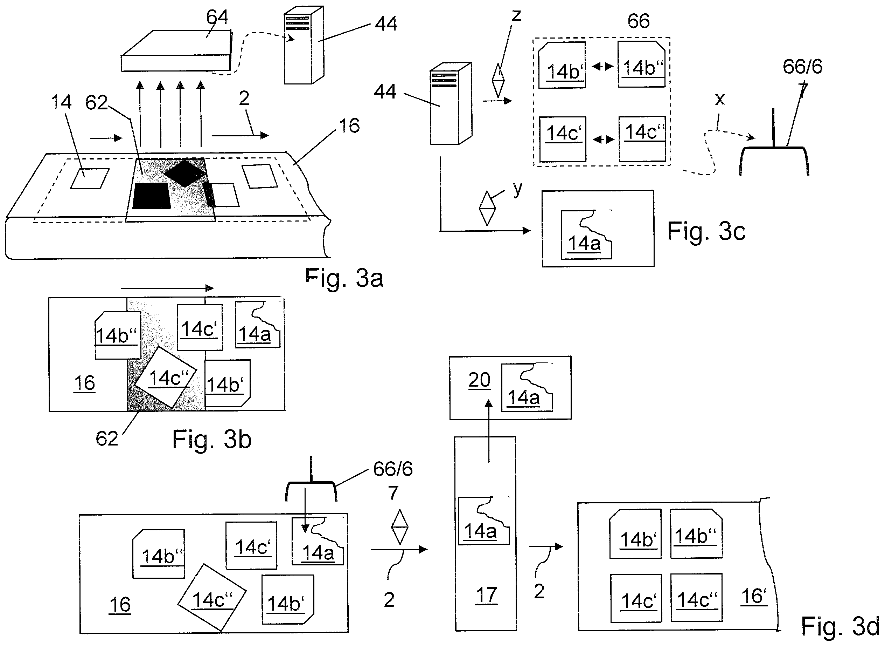

Die vollautomatische Sortier- und Ausrichtestation 60 umfasst unter der Förderbandoberseite, auf welcher die Sandwichscheiben 14 transportiert werden, eine starke Lichtquelle 62, die das Förderband durchstrahlt, wie dies in den Figuren 3a und 3b gezeigt ist. Das Bandmaterial für das Förderband ist entsprechend so gewählt, dass es den Anforderungen an Reisfestigkeit und Flexibilität für das Fördern der Sandwichscheiben 14 genügt und gleichzeitig eine möglichst gute Lichtdurchlässigkeit aufweist. Oberhalb des Förderbandes, der Lichtquelle 62 gegenüber ist ein optischer Detektor 64 z.B. in Form von eines oder mehrerer optischer Flächensensoren oder in Form einer oder mehreren Kameras vorgesehen. Mittels des optischen Detektors 64 und der Auswerte- und Steuereinheit 44 werden zum einen unbrauchbare Sandwichscheiben 14a erkannt (vgl. Fig. 3b und 3c, Symbol y), wenn diese z.B. unvollständig sind oder zu große Löcher haben, wie dies beim Backen von Brot immer vorkommen kann. Zum anderen wird die Geometrie der einzelnen Sandwichscheiben 14 registriert und die aktuelle Position von Sandwichscheiben 14 mit ähnlicher Geometrie wird bestimmt (vgl. Fig. 3b und 3c, Symbol z). In Figur 3b sind dies beispielsweise die Scheiben 14b', 14b" und 14c', 14c".

Schliesslich ergeht von der Auswerte- und Steuereinheit 44 ein Befehl an einen Roboter 66 mit einem Greifer 67 der Sortier- und Ausrichtestation 60, die unbrauchbaren Scheiben 14a auszusortieren und in einen Reststoffcontainer zu befördern (vgl. Fig. 3c, Symbol x), indem sie (vgl. Fig. 3d) beispielsweise sofort in einen Reststoffcontainer 20 abgelegt werden oder, was wegen des kürzeren Weges vorteilhafter ist, indem sie auf ein quer zur Förderrichtung (Pfeil 2) verlaufendes Querförderband 17 abgelegt werden, welches die unbrauchbaren Sandwichscheiben 14a in einen Reststoffcontainer 20 befördert, wie dies in Fig. 3d dargestellt ist. Weiter wird ein Signal an einen oder mehrere Roboter 66 mit ihren Greifern 67 gesandt, die von Detektor 64 und Auswerteeinheit 44 als geometrisch ähnlich erkannten Sandwichscheiben 14b', 14b" bzw. 14c', 14c" einander paarweise zugeordnet auf einem in Förderrichtung (Pfeil 2) förderndem Förderband 16' abzulegen. Dabei erhalten sie den Befehl die Scheiben geometrisch derart zueinander anzuordnen, dass nach einem Umklappen der zweiten Sandwichscheibe 14b", 14c" um 180° auf die ihr zugeordnete erste Sandwichscheibe 14b', 14c', die beiden Scheiben 14b', 14b' bzw. 14c', 14c" schliesslich geometrisch deckungsgleich aufeinander zu liegen kommen.

Das in Förderrichtung (Pfeil 2) fördernde Förderband kann dasselbe Förderband sein, mit dem die Scheiben 14 bereits an die Sortier- und Ausrichtestation 60 antransportiert wurden, es kann aber auch, wie in dem in Fig. 3d gezeigten Beispiel ein weiteres Förderband 16' sein. Wie oben bereits angedeutet, ist in Fig. 3d zwischen dem antransportierenden Förderband 16 und dem abtransportierenden Förderband 16' das Querförderband 17 angeordnet, dies macht den Weg des Greifers 67 zum Aussortieren einer unbrauchbaren Sandwichscheibe 14a besonders kurz. Denkbar wäre aber auch, dass das Förderband 16 weitergeführt wird und der Greifer 67 die unbrauchbare Sandwichscheibe 14a direkt in den Reststoffcontainer 20 ablegt oder das Querförderband 17 das antransportierende und in diesem Falle dann auch weitertransportierende Förderband 16 kreuzt, indem es diese unterquert oder überquert; oder dass das Querförderband 17 seitlich an Förderband 16 anschliesst.

Alle weiteren Schritte zur industriellen Herstellung eine gefüllten Sandwiches können gleich bleiben, wie dies für die Anlage in den Figuren 1a, 1b beschreiben ist. Durch die vollautomatische Sortier- und Ausrichtestation 60 können Arbeitskräfte eingespart und der Herstellungsprozess beschleunigt werden. Da die Ausrichtung der Sandwichscheiben 14 durch die Roboter 66 sehr viel genauer ist als eine Ausrichtung von Hand, können auch nachfolgende Arbeitsschritte schneller und genauer ausgeführt werden und auch eine Automatisierung nachfolgender Arbeitsschritte wird durch die genauere Ausrichtung der Sandwichscheiben erleichtert.

In einer weiteren Ausführungsform der Anlage ist auch die Zutatenstation 30 vollautomatisiert und auch die wertbestimmenden, in Scheiben von einem Slicer 22 zugeführten Zutaten 26 werden automatisch, durch Roboter 28 auf die paarweise einander zugeordneten Sandwichscheiben 14 aufgelegt. Die Zutaten werden wiederum vorteilhaft mittels einer Waage 24 in ihrer Qualität bzw. Brauchbarkeit kontrolliert. Um aber auch hier ein volle Automatisierung zu erreichen, wird auch die optische Qualitätskontrolle der scheibenförmigen Zutaten 26 von einem optischen Detektor 29, vorzugsweise einer Kamera, durchgeführt. Die Kamera bzw. die Auswerte und Steuereinheit sind für diesen Zweck vorteilhaft mit einer Bilderkennungssoftware ausgerüstet in der eine ideale Scheibe hinterlegt ist, mit der die jeweils detektierte Scheibe verglichen wird. Außerdem sind Grenzwerte für mögliche Abweichungen von dieser Idealscheibe hinterlegt, bei deren Überschreiten die Zutatenscheibe als unbrauchbare Zutatenscheibe 26a aussortiert und einem Reststoffcontainer 20' zugeführt wird. Auch diese Automation spart Arbeitskräfte und erlaubt eine Beschleunigung des Herstellungsprozesses.

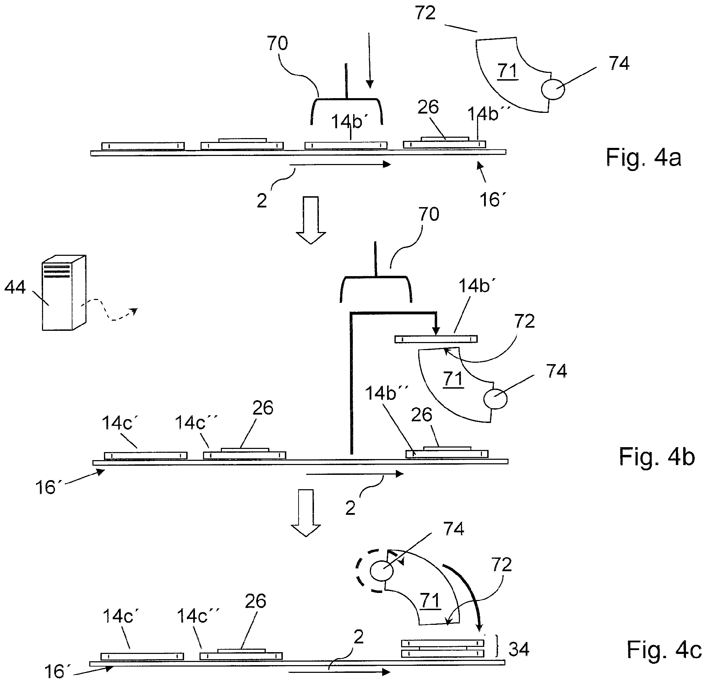

In einer weiteren Ausführungsform der erfindungsgemäßen Anlage wird auch die Zusammenklapp-Station als vollautomatisierte Zusammenklapp-Station 32 ausgeführt (vgl. Fig. 4a bis 4c). Hierzu weist die Station Greiforgane 70 auf, welche die jeweils zweiten Sandwichscheiben 14b", 14c" auf Ansaugstutzen 72 von Umwerfern 71 ablegen, welche mit einer Unerdruckanlage verbunden sind, wobei die Unterdruckanlage (nicht dargestellt) wenigstens eine Saugpumpe bzw. einen Kompressor und ein entsprechendes Leitungssystem für die Verteilung des unterdrucks auf die Ansaugstutzen umfasst. Die Greiforgane 70 können als Robotergreifer oder als Unterdruckgreifer ausgebildet sein, die von der gleichen Unterdruckanlage wie die Ansaugstutzen 72 mit Unterdruck versorgt werden. Die Umwerfer 71 mit ihren Ansaugstutzen 72 sind schwenkbar um eine möglichst senkrecht zur Förderrichtung (Pfeil 2) stehende Achse gelagert, wobei der minimale Schwenkradius bzw. Schwenkwinkel mindestens 180° beträgt und der tatsächliche Schwenkwinkel jeweils abgestimmt auf die aktuellen Anforderungen durch die Auswerte- und Steuereinheit 44 geregelt wird. Die Schwenkbarkeit ist vorteilhaft dadurch gewährleistet, dass die Umwerfer 71 mit einer möglichst senkrecht zur Förderrichtung 2 ausgerichteten Welle 74 fest verbunden sind, welche vorteilhafter Weise zugleich auch als Leitung für das zur-Verfügung-stellen des Unterdrucks dient. Die Anzahl der Umwerfer 71 ist idealerweise auf die Anzahl Sandwichscheiben 14 abgestimmt die auf dem Förderband 16, 16' nebeneinander in Reihen ausgereichtet befördert werden. In einer besonders vorteilhaften Ausführungsform können die Ansaugstutzen gesteuert über ihnen zugeordnete Ventile individuell mit Unterdruck beaufschlagt werden. Die Ansaugstutzen 72 der Umwerfer 71 sind in ihrer Ausgangsposition vorteilhaft nach oben ausgerichtet und werden mit Unterdruck beaufschlagt, sobald die zweiten Sandwichscheiben 14b", 14c" auf ihnen abgelegt werden oder bereits kurz vorher oder kurz nachher, jedenfalls aber spätestens, wenn die Schwenkbewegung mit den Sandwichscheiben auf den Ansaugstutzen 72 ausgeführt wird. Durch die Schwenkbewegung werden die auf den Ansaugstutzen festgesaugten zweiten Sandwichscheiben 14b", 14c" um 180° umgeklappt. In der Zeit, in der die zweiten Sandwichscheiben 14b", 14c" von den Ansaugstutzen 72 mittels der über das laufende Förderband 16, 16' hinweg ausgeführten Schwenkbewegung umgeklappt werden, werden die ersten Sandwichscheiben 14b', 14c' unter der Welle 74 mit den Umwerfern 71 hindurch geführt. Befinden sich die Umwerfer 71 mit den an ihren Ansaugstutzen 72 festgesaugten zweiten Sandwichscheiben 14b", 14c" nach der Schwenkbewegung über den ersten Sandwichscheiben 14b', 14c' wird der Unterdruck aufgehoben und zweiten Sandwichscheiben 14b", 14c" werden auf den ersten Sandwichscheiben 14b', 14c' abgelegt und ein Sandwich 34 gebildet. Die Umwerfer 71 werden in ihre Ausgangsposition zurück geschwenkt und das Ganze beginnt von neuem mit den dann auf dem Förderband 16, 16' herangeförderten Sandwichscheiben 14. Die Auswerte- und Steuereinheit 44 regelt die Fördergeschwindigkeit des Förderbandes 16, 16', die Geschwindigkeit des Zugriffs der Greiforgane 70 und des Umklappens der zweiten Sandwichscheiben 14b", 14c" um 180° (bzw. das Schwenken der Umwerfer 71 um den erforderlichen Schwenkwinkel für eine Umklappen der zweiten Sandwichscheiben 14b", 14c" um 180°) so, dass die zweiten Sandwichscheiben 14b", 14c" umgeklappt auf den ihnen zugeordneten ersten Sandwichscheiben 14b', 14c' zu liegen kommen. Auch die Beaufschlagung der Ansaugstutzen 72 mit Unterdruck wird durch die Die Auswerte- und Steuereinheit 44 geregelt.

In einer besonders bevorzugten Ausführungsform sind die Ansaugstutzen in Form von Rohren ausgebildet, welche so gebogen sind, dass sie einen Viertelkreis beschreiben und die an der Welle 74 die ebenfalls als Rohr ausgebildet ist z.B. mittels einer Schweissverbindung fixiert sind. Die Ausgestaltung als Viertelkreis erlaubt eine optimierte Schwenkbewegung der Welle 74 mit den Ansaugstutzen 72 um den erforderlichen Schwenkwinkel und vereinfacht die Abstimmung der Schwenkbewegung mit der Fördergeschwindigkeit des Förderbandes.

Alle weiteren Schritte zur industriellen Herstellung eine gefüllten Sandwiches, insbesondere Verpacken und allenfalls ein Tiefkühlen der Sandwiches, kann in gleicher Weise mit den bekannten Anlageelementen: Verpackungsstation 44, Tiefkühlstation 38, Abtransport 42 durchgeführt werden, wie dies für die Anlage in den Figuren 1a, 1b beschreiben ist.

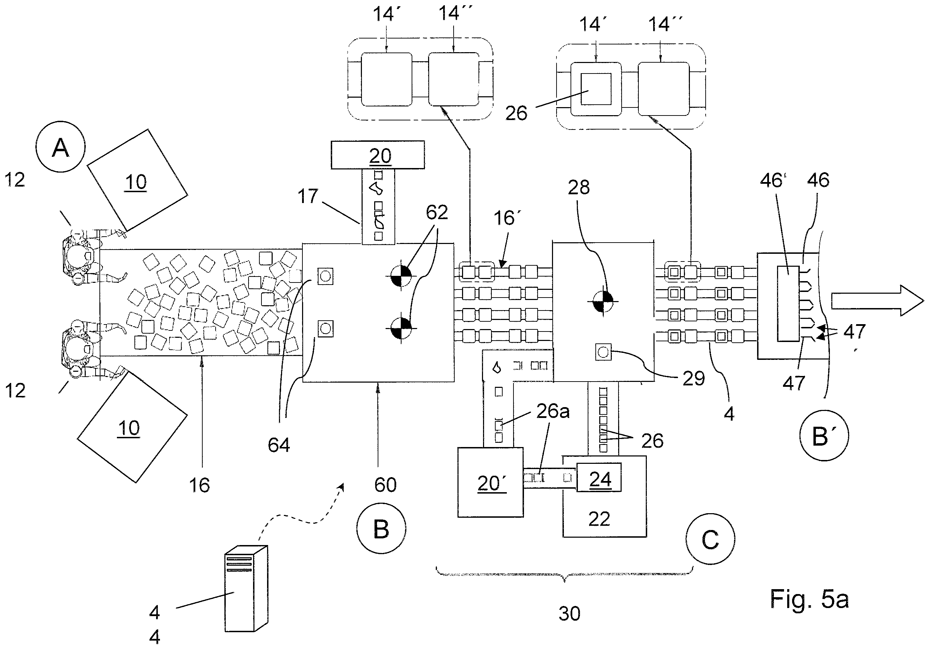

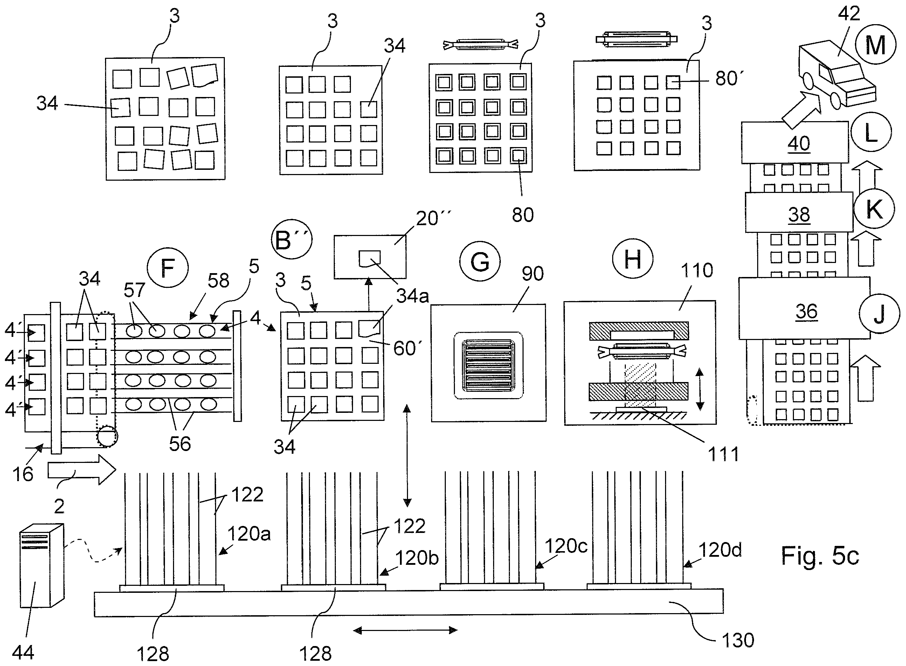

In einer weiteren bevorzugten Ausführungsform der erfindungsgemäßen Anlage und des erfindungsgemäßen Verfahrens werden vorgeröstete, gefüllte Sandwiches 80, 80' hergestellt, wie dies anhand der Figuren 5a bis 5c näher beschrieben wird. Dabei sind in Fig. 5c in den unteren beiden Reihen Vorrichtungen bzw. Verarbeitungsstationen 130, 120, 110, 90, 60', 58 dargestellt, während in der obersten Reihe schematisch das Arbeitsergebnis des jeweiligen Schenkelerarbeitungsschrittes dargestellt ist.

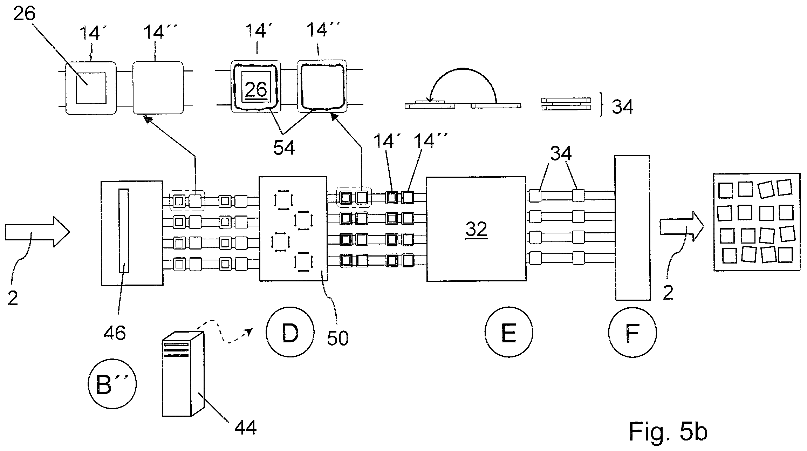

Wie in Fig. 5a dargestellt, werden für ein vorgeröstetes, gefülltes Sandwich 80, 80' in industrieller Fertigung - wie für nicht-geröstete gefüllte Sandwiches 34 auch - Sandwichscheiben 14 aus einem Magazin 10 vereinzelt (Schritt A). Diese werden sortiert und geordnet (Schritt B) und von einer Verarbeitungsstation zur nächsten transportiert. Den jeweils ersten Sandwichscheiben 14' werden vorzugsweise mit Hilfe einer oder mehreren Zutatenstation wertbestimmende Zutaten 26 in Scheibenform, körnig, flüssig oder pastös, zugeführt (Schritt C). Dann werden die zweiten Sandwichscheiben 14" auf die ersten Sandwichscheiben 14' gelegt (Schritt E), und zwar vorzugsweise in einer Zusammenklappstation 32, wie dies in Fig. 5b zu sehen ist. Die beiden Sandwichscheiben 14', 14" werden entlang ihrer Ränder fest miteinander verbunden (Schritt G (vgl. Fig. 5c)), und zwar unter Druck und Hitze vorzugsweise in einer Druckröststation 90. Die feste Verbindung wird dabei derart hergestellt (Schritt G), dass zum einen die Füllung (Zutaten 26) von der Verbindung unbeeinträchtigt bleibt und zum anderen bei einem für den Verzehr vorgesehenen Toasten - in aufrechter auf einer Schmalseite stehender Position in einem Toaster - keine der wertbestimmenden Zutaten 26 austreten kann. Hierfür werden die Sandwichscheiben 14', 14", bevor Sie aufeinander gelegt werden (Schritt E) und miteinander fest verbunden werden (Schritt G), an ihren Rändern mit einem lebensmittelkonformen Bindemittel versehen (Schritt D). Dies erfolgt vorzugsweise in einer Sprühstation 50. Damit die vorgerösteten, gefüllten Sandwiches 80 gut verpackt werden können. Optional können überstehende Ränder in einer Stanzstation 110 von den vorgerösteten, gefüllten Sandwiches 80 abgetrennt werden, so dass versäuberte, vorgeröstete, gefüllte Sandwiches 80' resultieren (vgl. die schematisch dargestellten Arbeitsergebnisse in der obersten Reihe der Fig. 5c).

In einer besonderen Ausführungsform ist die Stanzstation 110 in die Druckröststation 90 integriert und ausgansseitig der Druckröststation 90 liegen unmittelbar versäuberte, vorgeröstete, gefüllte Sandwiches 80' vor (nicht dargestellt).

Um die wertbestimmenden Zutaten für den Verzehr aufzubereiten oder für eine längere Lagerfähigkeit zu sterilisieren können optional die so vorgerösteten, gefüllten Sandwiches 80 bzw. 80' beispielsweise in einem Tunnelofen 36 erhitzt werden (Schritt I). Nach dem Abkühlen (im Anschluss an die Druckröststation 90 oder im Anschluss an den Tunnelofen 36) können die vorgerösteten, gefüllten Sandwiches 80, 80' entweder in einer Verpackungsanlage 40 verpackt werden (Schritt L) und dann zur Verteilung mit entsprechenden Transportmitteln 42 in Lager oder in Verkaufsstellen abtransportiert werden (Schritt M) oder je nach Bedarf vor dem Verpacken (Schritt L) noch in einer Tiefkühlstation 38, beispielsweise einem Spiralkühler, tiefgefroren werden (Schritt K).

Die ersten Schritte der Herstellung, nämlich Vereinzelung A, Sortierung und Ausrichtung B sowie Bestückung mit wertbestimmenden Zutaten C, erfolgen analog zu den Schritten, wie sie anhand von Figur 2 beschrieben sind und mit einer Sortier- und Ausrichtestation 60 aus Fig. 2 bzw. Fig. 3a bis 3c, einer oder mehreren der Zutatenstation 30 aus Fig. 2 optional auch mit Zutatenstationen für körnige, pastöse oder flüssige Zutaten. Im Unterschied zur Anlage in Fig. 2 ist die Anlage in Fig. 5a bis 5c stromab der Zutatenstationen 30 mit einer weiteren Justierstation 46 versehen. Diese Justierstation 46 richtet die paarweise einander zugeordneten Sandwichscheiben 14', 14" noch genauer zueinander aus (schritt B'). War die Sortier- und Ausrichtestation 60 in der Lage die Sandwichscheiben 14 mit einer Genauigkeit von etwa ±5mm bis etwa ±3mm in Förderrichtung 2 auszurichten, so kann die Justierstation 46 die Sandwichscheibe 14', 14" auf etwa ±1.5mm bis ±1mm in Förderrichtung 2 ausrichten. Dies ist beispielsweise mit Hilfe eines Justierbalkens 46' möglich, der in Förderrichtung 2 über das Förderband 16, 16' bewegbar ist und die Sandwichscheiben 14', 14" in oder optional gegebenenfalls auch gegen die Förderrichtung 2 auf dem Förderband 16, 16' in Position schieben kann. Eine derart genaue Ausrichtung ist relevant für die Weiterverarbeitung des Sandwichscheiben in den weiteren Verarbeitungsstationen, insbesondere für das Aufbringen des lebensmittelkonformen Bindemittels, für das Zusammenklappen der Sandwichscheiben 14', 14" und das Verbinden der Sandwichscheiben 14', 14" miteinander (s.u.).

In einer besonderen Ausführungsform weist der Justierbalken 46' Stege 47 mit einem leicht erweiterten Einlauf 47' auf, die in Förderrichtung 2 vom Justierbalken 46' abstehen und mit deren Hilfe Sandwichscheiben 14', 14" auch senkrecht zur Förderrichtung 2 noch nachpositioniert werden können (siehe Fig. 5a), indem sie durch den Einlauf 47' erfasst und zwischen zwei benachbarte Stege 47 geschoben werden.

In Fig. 5b ist die Justierstation 46 mit einem einfachen Justierbalken 46' ohne Stege dargestellt. Außerdem sind weitere stromab der Justierstation 46 entlang des Förderbandes 16, 16' angeordnete Verarbeitungsstationen gezeigt.

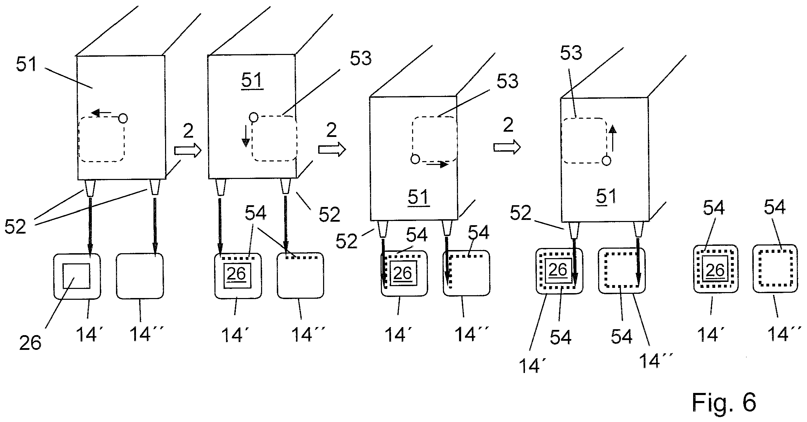

Der Justierstation 46 stromab benachbart ist eine Sprühstation 50 angeordnet (siehe Fig. 5b und Fig. 6), mit deren Hilfe gleichzeitig lebensmittelkonformer Bindemittel im Randbereich der jeweils ersten und zweiten Sandwichscheiben 14', 14" aufgesprüht wird, und zwar ausserhalb des zentralen Bereichs, in dem die wertbestimmenden Zutaten 26 platziert sind. Als lebensmittelkonformer Bindemittel kommen Gelatine, Kartoffelstärke, Maisstärke oder ähnliches in Frage. Am besten geeignet auch im Hinblick auf mögliche allergische Reaktionen hat sich eine wässrige Eiweiss-Lösung insbesondere eine wässrige Lösung mit Milcheiweiss, wobei das Milcheiweiss, aus Kuhmilch, Ziegenmilch, Schafsmilch, Soyamilch gewonnen sein kann.

Die Sprühstation 50 weist einen senkrecht zur Förderrichtung 2 ausgerichteten Sprühbalken 51 mit in Förderrichtung 2 paarweise angeordneten Sprühdüsen 52 auf. Die Sprühdüsen 52 weisen mit ihrer Sprühöffnung gegen das Förderband und sind derart zueinander beabstandet, dass bei genauer Ausrichtung eine erste und eine ihr zugeordnete zweite Sandwichscheibe 14', 14" in ihrem jeweilige Randbereich in einem Arbeitsschritt gleichzeitig mit dem lebensmittelkonformen Bindemittel versehen werden können. Die Anzahl der senkrecht zur Förderrichtung in einer Doppelreihe angeordneten Sprühdüsen 52 richtet sich nach der Anzahl der auf dem Förderband 16, 16' nebeneinander geförderten Sandwichscheiben 14. Für das Aufsprühen des lebensmittelkonformen Bindemittels bewegt sich der Sprühbalken 51 mit gleicher Geschwindigkeit wie das unter ihm angeordnete Förderband 16, 16' in Förderrichtung 2. Dieser Bewegung in Förderrichtung 2 ist eine Sprühbewegung 53 überlagert, welche die Sprühdüsen 51 am Rand der Sandwichscheiben 14 entlang führt und die in Fig. 6 durch eine gestrichelte Linie 53 angedeutet ist. Mit der Beendigung des Aufsprühvorgangs (Schritt D) ergibt sich auf den Sandwichscheiben 14', 14" am Rand idealerweise eine geschlossene Spur 54 des lebensmittelkonformen Bindemittels und der Sprühbalken 51 wird in einem Rückhub in seine Ausgangsposition bewegt, von wo aus ein erneuter Arbeitsschritt D (Aufsprühen von lebensmittelkonformen Bindemittel) auf neu herangeführte Sandwichscheiben 14', 14" erfolgt.

Der Sprühstation 50 stromab benachbart ist eine Zusammenklappstation 32 angeordnet, wie sie im Zusammenhang mit den Figuren 2 und 4a bis 4c bereits beschrieben wurde. In dieser Zusammenklappstation 32 werden die zweiten Sandwichscheiben 14" wie beschrieben auf die ersten Sandwichscheiben 14' mit dem wertbestimmenden Zutaten 26 aufgelegt.

Die Arbeitsschritte A bis E können kontinuierlich durchgeführt werde, weswegen es sinnvoll ist, die Sandwichscheiben 14, 14' im Bereich dieser Arbeitsschritte A bis E mittels Förderband 16, 16' kontinuierlich zu transportieren.

Im Gegensatz zu den oben beschriebenen kontinuierlich durchführbaren Arbeitsschritten A bis E erfolgt das Druckrösten (Schritt G) getaktet. Das Druckrösten dauert weniger als eine Minute, vorzugsweise weniger als 40s, insbesondere 10s bis 20s. Die Röstzeit ist abhängig von der Dichte, Konsistenz und Feuchtigkeit der Sandwichscheiben, dem Wassergehalt und der Konsistenz der Zutaten, der aufgebrachten Hitze und des aufgebrachten Drucks. Bei vorgegebenen Sandwichscheiben und vorgegebenen Zutaten können die Parameter: Druck, Temperatur und Röstdauer durch ein computergestütztes Optimierverfahren ideal aufeinander abgestimmt werden. Der Druck beträgt zwischen 10kg/cm2 und 40kg/cm2. Für die meisten Anwendungen haben sich Drücke im Bereich von 20kg/cm2 bis 30kg/cm2 bewährt. Als günstig haben sich Temperaturen im Bereich von 160°C bis 220°C, insbesondere im Bereich von 180°C bis 200°C erwiesen.

Auch das Wegstanzen der Ränder (Arbeitsschritt H) erfolgt getaktet und kann, da die Stanzzeiten unkritisch sind (auch Stanzzeiten von weniger als 10s sind möglich) im gleichen Takt durchgeführt werden wie das Druckrösten. Daher ist auch, wie oben bereits angemerkt eine Kombination der beiden Arbeitsschritte Druckrösten (G) und Stanzen (H) in einer Kombinierte Station (nicht dargestellt) möglich.

Wegen der getakteten Arbeitsweise in den Arbeitsschritten G und H, werden die mittels Förderband 16, 16' kontinuierlich von der Zusammenklappstation 32 angelieferte Sandwiches 34 vor der Druckröststation 90 in einer Übergabestation 58 zu Gruppen 3 zusammengefasst (Schritt F). Die Gruppen 3 von Sandwiches 34 können dann in der Druckröststation 90 und der Stanzstation 110 im Takt bearbeitet werden. Die Aufnahmekapazität, d.h. die Anzahl Sandwiches 34, die in der Druckröststation 90 und der Stanzstation 110 jeweils gleichzeitig weiterverarbeitet werden können, ist idealerweise gleich. Besonders gut ist es natürlich, wenn die Anzahl Reihen 4 und Spalten 5 von verarbeitbaren Sandwichscheibe 34 und deren Abstand zueinander in den Verarbeitungsstationen 90, 110 gleich ist. Angepasst an die Kapazität der Druckröststation 90 und der Stanzstation 110 umfasst jede Gruppe 3 von Sandwiches 34 die in der Übergabestation 58 gebildet wird eine definierte Anzahl von Reihen und Spalten an Sandwiches 34, beispielsweise 7x4, 8x8 oder wie in dem gezeigten Beispiel 4x4 oder eine andere geeignete Zahl. Die Kapazität des Förderbandes 16, 16' und insbesondere die Anzahl Sandwich-Reihen 4' die nebeneinander auf dem Förderband 16, 16' gefördert werden können sind mit Vorteil ebenfalls auf die Kapazität der Druckröststation 90 und Stanzstation 110 abgestimmt.

Die in Gruppen 3 zusammengefassten Sandwiches 34 werden entweder im gleichen Arbeitsschritt F bereits in der Übergabestation 58 oder, wie hier dargestellt, in einem weiteren Arbeitsschritt B"' in einer weiteren Sortier- und Ausrichtestation 60' sortiert und ausgerichtet. Dabei können z.B. solche Sandwiches 34a aussortiert und in einen Reststoffcontainer 20" überführt werden, die aufgrund ihres Gewichtes oder aufgrund optischer Abweichungen (z.B. keine die erste Sandwichscheibe 14' bedeckende zweite Sandwichscheibe 14" oder fehlende Zutat(en)) als unvollständig/unbrauchbar erkannt werden. Hierzu kann die weitere Sortier- und Ausrichtestation 60' bzw. allenfalls die Übergabestation mit einer Waage und einem optischen Erkennungssystem ausgerüstet sein, wie diese im Zusammenhang mit der Sortier- und Ausrichtestation 60 und der Zutatenstation 30 der Fig. 2 beschrieben wurden. Des Weiteren können die in Gruppen 3 zusammengefassten Sandwiches 34 in Reihen und Spalten genau ausgerichtet werden, damit sie in der Druckröststation 90 und Stanzstation 110 problemfrei bearbeitet werden können.

Hierzu werden die Sandwiches 34 beispielsweise durch einen Schieber 54 vom Ende des Förderbandes 16, 16' in Schienen 56 geschoben, die in Förderrichtung ausgerichtet sind und welche Bestandteil der Übergabestation 58 sind. Der Schieber 54 kann separat ausgebildet sein oder auch zur Übergabestation 58 gehören. Er kann beispielsweise in Form eines über das Förderband 16, 16' in unabhängiger Geschwindigkeit hinweg bewegbaren Balkens ausgestaltet sein, wie in Fig. 5c dargestellt, oder in Form von einzelnen, unabhängig bewegbaren Schiebern, wobei dann jeder in Förderrichtung 2 transportierter Sandwichreihe 4' auf dem Förderband 16, 16' ein Schieber zugeordnet ist.

Die in Förderrichtung 2 ausgerichtete Schienen 56 übernehmen die Sandwiches 34 vom Förderband 16, 16' idem sie die Sandwiches 34 jeweils an ihren seitlichen, in Förderrichtung 2 ausgerichteten Rändern stützend untergreifen. Die Schienen sind als Winkelschienen mit einem 90° Winkel zwischen den Schenkeln ausgebildet, so dass jeweils ein erster Schenkel die Sandwiches 34 seitlich stützend am Rand untergreift während der andere, im Winkel von 90° zum ersten Schenkel angeordnete zweite Schenkel der Winkelschiene als seitliche Führung dient, wenn die Sandwiches 34 auf die Schienen 56 geschoben werden. Der Anzahl Reihen und Spalten der zu bildenden Gruppe 3 von Sandwiches 34 entsprechend sind zwischen den Schienen 56 Teller 57 in definiertem Abstand zueinander angeordnet. Die Teller 57 sind in ihren Dimensionen kleiner als die Abstände der Schienen 56 zueinander und kleiner als die Abstände der Sandwiches 34 zueinander, wenn sie zu einer Gruppe 3 zusammengefasst auf den Schienen abgelegt sind. Die Schienen 56 sind vertikal bewegbar und die Teller 57 liegen in der Ausgangsposition unterhalb der Schienen 56. Sind die Sandwiches 34 einer Gruppe 3 auf die Schienen 56 geschoben, senken sich die Schienen 56 und die Sandwiches 34 kommen auf den Tellern 57 zu liegen. Von dort können sie als Gruppe 3 von einem Manipulator 120 übernommen und beispielsweise in die weitere Sortier- und Ausrichtstation 60' übergeben werden oder in die Druckröststation 90, wenn das Ausrichten und Sortieren - Sortieren im Sinne eines Aussortierens von unbrauchbaren Sandwiches (s.o.) - bereits in der Übergabestation vorgenommen wurde.

Eine schematische Draufsicht auf einen Manipulator 120 ist in Fig. 5c in der untersten Reihe dargestellt, wobei hier insgesamt vier Manipulatoren 120a bis 120d zu einer Manipulationseinheit 130 zusammengefasst sind, die ihre jeweiligen Arbeitshübe gemeinsam ausführen. In dem hier gezeigten Beispiel entnimmt Manipulator 120a jeweils eine Gruppe 3 an Sandwiches 34 aus der Übergabestation 58 und übergibt sie an die weitere Sortier- und Ausrichtstation 60'. Manipulator 120b entnimmt die Gruppe 3 sortierter und ausgerichteter Sandwiches 34 aus weitere Sortier- und Ausrichtstation 60' und übergibt sie an die Druckröststation 90. Manipulator 120c entnimmt die Gruppe 3 der nun vorgerösteten, gefüllten Sandwiches 80 aus der Druckröststation 90 und übergibt sie der Stanzstation 110. Manipulator 120d entnimmt schliesslich die Gruppe 3 nun am Rand versäuberter, vorgerösteten, gefüllten Sandwiches 80' aus der Stanzstation 110 und übergibt sie an ein weiteres Förderband 19 mit dessen Hilfe die auf diese Eise fertig gestellten versäuberter, vorgerösteten, gefüllten Sandwiches 80' zur Verpackungsstation 40 und optional durch einen Tunnelofen 36 und/oder eine Tiefkühlstation 38 gefördert werden.

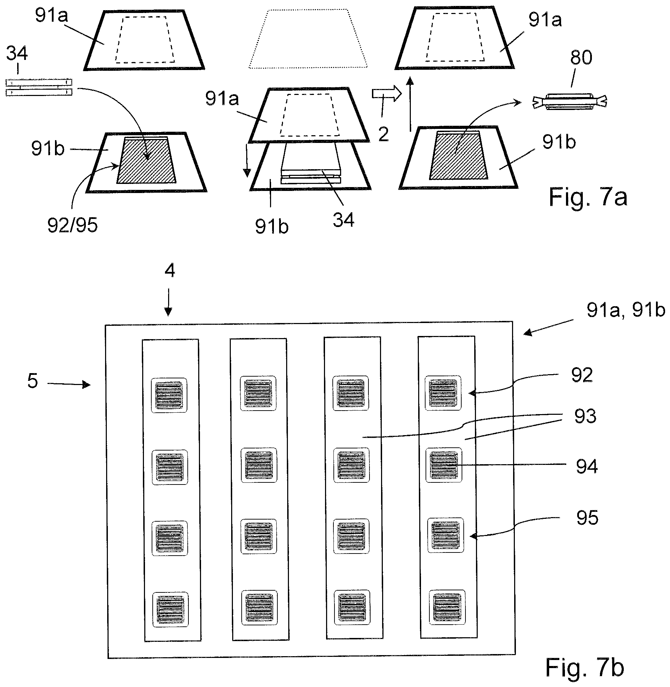

Ein Beispiel für eine Druckröststation 90 und das Druckröstverfahren, sind in den Figuren 7a bzw. 7b schematisch dargestellt. Die Druckröststation 90 weist zwei einander gegenüberliegende Pressplatten 91a, 91b auf. Die Pressplatten 91a, 91b können elektrisch beheizt sein, mit Heizpatronen, die eingelegt werden können oder es können Leitungen in den Pressplatten 91a, 91b vorgesehen sein die mit einem heissen flüssigen oder gasförmigen Medium durchströmbar sind.

Jede der Pressplatten 91a, 91b weist so viele Reihen 4 und Spalten 5 und damit so viele Pressheizplätze 92 auf, wie Reihen 4 und Spalten 5 und somit Anzahl Sandwiches 34 in einer Gruppe 3 zu verarbeitender Sandwiches 34 vorgesehen sind. In einer bevorzugten Ausführungsform der Druckröststation 90 weisen die Pressheizplätze 92 wenigstens in einer der Pressplatten 91a oder 91b, besser noch in beiden Pressplatten 91a, 91b einen zentralen Bereich mit einer Vertiefung 95 auf, welche der Aufnahme des zentralen, mit Zutaten bestückten Bereichs eines Sandwiches 34 dient. Die Pressheizplätze 92 sind vorzugsweise in Form von Schablonen 93 ausgebildet, die fest in oder an den Pressplatten 91a, 91b befestigbar sind. Es versteht sich, dass jeweils eine Schablone 93 an der oberen Pressplatte 9a und eine in oder an der unteren Pressplatte 91b derart befestigt ist, dass die Pressheizplätze 92 der Schablonen einander deckungsgleich gegenüberliegen.

Für das Druckrösten G werden die Sandwiches z.B. mittels eines Manipulators 120 in der Druckröststation 90 auf der unteren Pressplatte 91a jeweils auf einem Pressheizplatz 92 abgelegt. Die obere Pressplatte 91b wird abgesenkt (vgl. Fig. 7a) und mit ihren in Flucht mit den unteren Pressheizplätzen 92 angeordneten Pressheizplätzen 92 auf die Sandwiches 34 und die untere Pressplatte 91b gepresst.

Nach der vorbestimmten Press- und Heizzeit wird die obere Pressplatte 91a wieder angehoben und die vorgerösteten, gefüllten Sandwiches 80 können entnommen werden. Die Schablonen 93 sind mit Vorteil aus Teflon gefertigt, so dass sich die vorgerösteten, gefüllten Sandwiches 80 leicht aus ihren Pressheizplätzen 92 lösen und aus der Druckröststation 90 entfernt werden können. Eine Schablone 93 weist vorzugsweise entweder alle Pressheizplätze 92 für eine Gruppe 3 auf oder die Pressheizplätze 92 einer Spalte 5 oder einer Reihe 4, wie es in Fig. 7b dargestellt ist. Die Schablonen 93 sind austauschbar, so dass die Abmessungen der Pressheizplätze 92 auf die Dimensionen und die Anzahl der zu verarbeitenden Sandwiches 34 angepasst werden können. Außerdem können in die Schablonen 93 im Bereich der Pressheizplätze 92, insbesondere in der Vertiefung 93, Muster 94 eingearbeitet sein, die beim Druckrösten G ein gewünschtes Emblem oder ein gewünschtes Muster in das vorgeröstete, gefüllte Sandwich 80 "einbrennen".

Um die Ränder der vorgerösteten, gefüllten Sandwiches 80 in Form zu schneiden, können die vorgerösteten, gefüllten Sandwiches 80 wie in Fig. 5c dargestellt einer Stanzstation 110 zugeführt werden. Diese weist analog zur Druckröststation Reihen 4 und Spalten 5 von Auflagestempeln 111 auf, auf denen die vorgerösteten, gefüllten Sandwiches 80 in der Ausgangsposition abgelegt werden können. Jeder Auflagestempel 111 ist mit einem Stanzrahmen 112 umgeben der an dem Auflagestempel 111 vorbei auf und ab bewegbar ist. Den Reihen 4 und Spalten 5 an Auflagestempeln 111 und Stanzrahmen 112 gegenüber ist eine Anpressplatte 113 vorgesehen, gegen welchen die Stanzrahmen 112 gepresst werden. Dadurch werden die überstehenden, ausserhalb der Stanzrahmen 112 liegende Ränder der vorgerösteten, gefüllten Sandwiches 80 abgetrennt und es resultieren versäuberte, vorgeröstete, gefüllte Sandwiches 80'. Die Stanzrahmen werden an den Auflagestempeln 11 vorbei abgesenkt und die versäuberten, vorgerösteten, gefüllten Sandwiches 80' liegen wieder frei auf den Auflagestempeln 111 und können entnommen werden. In einer besonderen Ausführungsform ist die Anpressplatte 113 gegenläufig zur Bewegung der Stanzrahmen auf und ab bewegbar, so dass Stanzrahmen 112 und Anpressplatte 113 also gegeneinander bewegbar sind. Dies ist besonders vorteilhaft wenn mit hoher Geschwindigkeit gearbeitet werden soll.

Vorteilhaft sind Abstreifer vorgesehen, welche abgetrennte Randreste von den Stanzrahmen 112 entfernen. wobei diese Unterhalb der Stanzstation 110 ist mit Vorteil eine Auffangwanne mit Schieber vorgesehen, der heruntergefallene abgetrennte Ränder zusammenschiebt und auf ein Entsorgungsband oder in einen Entsorgungscontainer befördert.

In einer besondern Ausführungsform der Anlage ist die Druckröststation 90 mit Stanzrahmen ausgerüstet, die beispielsweise bewegbar in die obere Pressplatte 91a eingearbeitet sein können, wobei die untere Pressplatte im Randbereich der Pressheizplätze 92 zugleich als Anpressplatte dient. Mit einer solchen Druckröststation kann die Stanzstation und ein Manipulator eingespart werden was kosten und zeit erspart und den Platzbedarf der Anlage verringert.

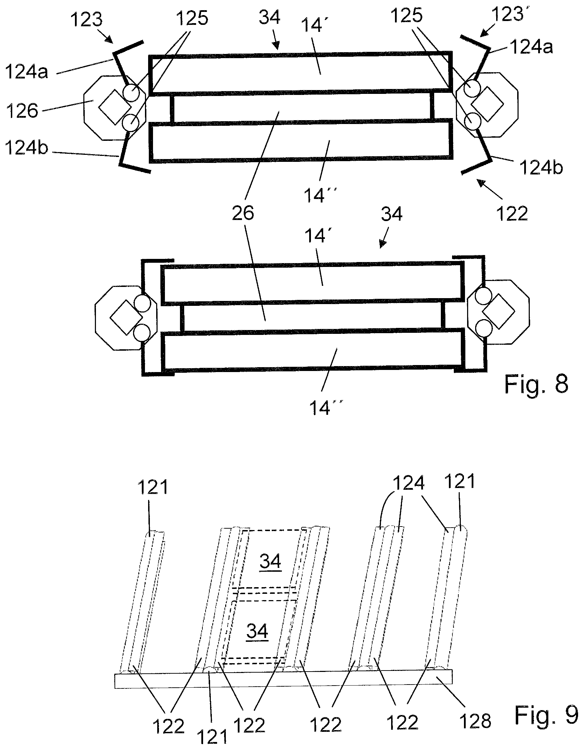

In den Figuren 8 und 9 sind weitere Ansichten von Teilen eines Manipulators 120 dargestellt. Jeder Manipulator 120 verfügt über eine Anzahl Greifschieneneinheiten 122, die der Anzahl Spalten 5 an Sandwiches 34 in einer Gruppe 3 entspricht die vom Manipulator bewegt werden soll. In dem hier gezeigten Beispiel verfügt somit jeder Manipulator 120 über vier Greifschieneneinheiten 122. Jede Greifschieneneinheiten 122 weist zwei einander gegenüberliegende Greifschienenpaare 123, 123' auf, wobei jedes Greifschienenpaar 123, 123' zwei Profilschienen 124a, 124b aufweist. Jede Profilschiene 124a, 124b ist verschwenkbar um eine Schwenkachse 125 gelagert, die ihrerseits an oder in einer Halterung 126 gelagert sind. Die Halterungen 126 stehen ihrerseits etwa senkrecht von einer gemeinsamen Befestigungstrebe 128 ab, an der sie fixiert sind, z.B. durch eine Schweissnaht oder durch eine abgedeckte Verschraubung. In Figur 8 oben sind die Greifschienenpaare 123 in offener Stellung gezeigt, kurz bevor sie ein Sandwich 34 ergreifen. In der unteren Darstellung der Figur 8 sind die Greiferschienenpaare 123 aufeinanderzu verschwenkt, so dass sie das Sandwich 34 an zwei seiner einander gegenüberliegenden Rändern ergreifen und halten. Die Profilschienen 124 sind in Ihrer Gestaltung (z.B. Winkel zwischen ihren Flanken und Mass in dem die eine Flanke von der Schwenkachse 125 absteht bzw. die andere Flanke in den Raum zwischen den Schienen in geschlossener Position hineinragt) sowie der Schwenkwinkel und der Greifdruck und der Abstand der Schienenpaare 123 sind auf das jeweilige Produkt bzw. Sandwich 34, seine Dimensionen, seine Konsistenz und sein Gewicht abgestimmt und so gewählt, dass die Greiferschienenpaare die jeweiligen Sandwiches 34 problemlos ergreifen , halten und transportieren können, ohne diese zu Beschädigen, ohne dass diese auseinanderbrechen oder aus den Greiferschieneneinheiten 122 herausfallen, und dies auch bei sehr hohen Bewegungsgeschwindigkeiten bzw. Beschleunigungen während der Arbeitshübe.

Wie oben bereits erwähnt sind in dem in Fig. 5c gezeigten Teil einer erfindungsgemäßen Anlage zur Herstellung von vorgerösteten, gefüllten Sandwiches vier nebeneinander angeordnete Manipulatoren 120a bis 120d vorgesehen. Damit diese ihre Arbeitshübe gemeinsam ausführen können, sind die Befestigungsstreben 128 der einzelnen Manipulatoren 124a bis 124d in einer Manipulationseinheit 130 fixiert, über welche die gleichzeitige Bewegung aller Manipulatoren sichergestellt ist.

Wie anhand der Figuren deutlich gemacht werden konnte, ist es mit einer erfindungsgemäßen Anlage und dem erfindungsgemäß verfahren möglich die Herstellung von gefüllten Sandwiches zu vereinfachen und zeit- und kostenfreundlicher zu gestalten. Auch ermöglichen bestimmte Ausführungsformen der Anlage und des Verfahrens über die Herstellung gewöhnlicher Sandwiches 34 hinaus die Zeit- und kostengünstige Herstellung vorgerösteter, gefüllter Sandwiches 80 die auch in versäuberter Form 80' erzeugbar sind und zum Verzehr nach Toasten in einem herkömmlichen Toaster gedacht und geeignet sind.

Dem Fachmann ist klar, daß und in welcher Weise sich die beschriebenen Ausführungsformen bzw. die anhand der Ausführungsbeispiele beschriebenen Details im Rahmen der Patentansprüche sinnvoll kombinieren lassen. Aus Platzgründen ist es aber nicht möglich alle möglichen und sinnvollen Kombinationen im Detail figürlich darzustellen und/oder zu beschreiben.

## Patentansprüche

1. Verfahren zur industriellen Herstellung gefüllter Sandwiches (34, 80, 80') umfassend zwei Sandwichscheiben (14, 14', 14", 14b', 14b", 14c', 14c") und wenigstens eine wertbestimmende Zutat (26), wobei das Verfahren folgende Schritte umfasst:
• (A) Sandwichscheiben (14, 14a, 14', 14", 14b', 14b", 14c', 14c") vereinzeln und auf ein Förderband (16) auflegen
• (B) unbrauchbare Sandwichscheiben (14a) aussortieren und übrige Sandwichscheiben (14, 14', 14", 14b', 14b", 14c', 14c") für eine Weiterverarbeitung ausrichten,
• (C) jede erste Sandwichscheibe (14', 14b', 14c',) mit wenigstens einer scheibenförmigen (26), körnigen, pastösen oder flüssigen Zutat versehen,
• (E) auf jede erste, mit wenigstens einer Zutat (26) versehene Sandwichscheibe (14', 14b', 14c',) eine zweite Sandwichscheibe (14", 14b" 14c") auflegen, wodurch sich ein Sandwich (34) ergibt wobei
• zum Aussortieren und Ausrichten (B) der Sandwichscheiben (14, 14', 14", 14b', 14b", 14c', 14c") das Förderband (16) so durchleuchtet wird, dass das Licht, welches das Förderband (16) durchdringt, von optischen Detektoren (64) erfasst wird und
• über Helligkeitsunterschiede und/oder Farbunterscheide und deren örtliche Verteilung unbrauchbare Sandwichscheiben (14a) und Sandwichscheiben (14b', 14b", 14c', 14c") ähnlicher Geometrie erkannt werden und ihre Position auf dem Förderband (16) bestimmt wird; und
• wenigstens ein Greifer (67) aufgrund der Information über Art und Position der Sandwichscheiben (14, 14a, 14', 14", 14b', 14b", 14c', 14c") so gesteuert wird, dass er die unbrauchbaren Sandwichscheiben (14a) aussortiert
• und jeweils zwei Sandwichscheiben (14b', 14b", 14c', 14c") ähnlicher Geometrie auf einem Förderband (16, 16') ablegt, und zwar paarweise einander zugeordnet.

2. Verfahren nach Anspruch 1,
**dadurch gekennzeichnet, dass**
das Ablegen auf dem Förderband (16, 16') und die paarweise Zuordnung von einander geometrisch ähnlichen Sandwichscheiben (14b', 14b", 14c', 14c") derart erfolgt, dass bei einem Umklappen der jeweils zweiten Sandwichscheibe (14", 14b", 14c") um 180° und Auflegen derselben auf die jeweils zugeordnete erste Sandwichscheibe (14', 14b', 14c') beide Sandwichscheiben (14', 14", 14b', 14b", 14c', 14c") geometrisch etwa deckungsgleich aufeinander zu liegen kommen.

3. Verfahren nach Anspruch 1 oder 2
**dadurch gekennzeichnet, dass**
das Ablegen einer jeweils zweiten Sandwichscheibe (14", 14b", 14c") auf einer jeweils zugeordneten ersten Sandwichscheibe (14', 14b', 14c') durch Umklappen der jeweils zweiten Sandwichscheibe (14", 14b", 14c") um 180° und Auflegen derselben auf die jeweils zugeordnete erste Sandwichscheibe (14', 14b', 14c') erfolgt, und zwar indem die jeweils zweite Sandwichscheibe (14", 14b", 14c") mittels Unterdruck an einem Ansaugstutzen (72) eines mit Unterdruck beaufschlagbaren Umwerfers (71) festgesaugt und zunächst vom Förderband (16, 16') weg bewegt wird, wobei der Umwerfer (71) eine Schwenkbewegung von etwa 180° ausführt, insbesondere eine Schwenkbewegung im Bereich von 140° bis 200°, wobei die zweite Sandwichscheibe (14", 14b", 14c") am Ende der Schwenkbewegung wieder auf das Förderband (16, 16') und auf die auf dem Förderband (16, 16') transportierte, zugeordnete erste Sandwichscheibe (14', 14b', 14c') zu bewegt wird und durch Aufhebung des Unterdrucks schliesslich auf der besagten ersten Sandwichscheibe (14', 14b', 14c') abgelegt wird, wobei das Ansaugen der zweiten Sandwichscheibe (14", 14b", 14c"), das Verschwenken des Umwerfers (71) und die Aufhebung des Unterdrucks in ihrer Geschwindigkeit mit der Fördergeschwindigkeit des Förderbandes (16, 16') abgestimmt ist.

4. Verfahren nach einem der vorherigen Ansprüche **dadurch gekennzeichnet, dass**
• Sandwichscheiben (14', 14", 14b', 14b", 14c', 14c") nachdem sie zu einem Sandwich (34) zusammengefügt wurden (E) in ihren Randbereichen durch Aufbringen von Druck und Hitze miteinander fest und flüssigkeitsdicht verbunden werden (G), so dass ein vorgeröstetes, gefülltes Sandwich (80) resultiert, wobei der Randbereich jenen mit wenigstens einer Zutat (26) versehenen zentralen Bereich eines Sandwiches (34, 80, 80') umgibt.

5. Verfahren nach Anspruch 4,
**dadurch gekennzeichnet, dass**
• Druck und Temperatur für weniger als 40s, insbesondere 10s bis 20s und vorzugsweise für 15s bis 16s aufgebracht werden, wobei
• der Druck zwischen 10kg/cm2 und 40kg/cm2 beträgt und insbesondere in einem Bereich von 20kg/cm2 bis 30kg/cm2 liegt, und
• die Temperatur im Bereich von 160°C bis 220°C, insbesondere im Bereich von 180°C bis 200°C liegt.

6. Verfahren nach Anspruch 4 oder 5,
**dadurch gekennzeichnet, dass**
im Randbereiche zwei zueinander beabstandete umlaufende Linien mit höherem Druck beaufschlagt werden, so dass sich im verbundenen Randbereich zwei nebeneinander um den zentralen Bereich des Sandwiches umlaufende Linien festerer Verbindung und höherer Dichte ergeben.

7. Verfahren nach einem der Ansprüche 4 bis 6,
**dadurch gekennzeichnet, dass**
• vor dem Aufbringen von Druck und Hitze auf den Randbereich (G)
• die ersten und zweiten Sandwichscheiben (14', 14", 14b', 14b", 14c', 14c") jeweils auf jener Seite, die im fertigen Sandwich (34) ins Sandwichinnere ausgerichtet ist, jeweils im Bereich ihrer Ränder mit einem lebensmittelkonformen Bindemittel (54) versehen werden (D), wobei das lebensmittelkonformen Bindemittel insbesondere ein Eiweiss ist, welches in Form einer wässrigen Eiweisslösung entlang der Randbereiche aufgesprüht wird.

8. Verfahren nach einem der Ansprüche 4 bis 7,
**dadurch gekennzeichnet, dass**
äußerste, unsaubere Ränder eines vorgerösteten, gefüllten Sandwiches (80) abgetrennt werden (H), so dass ein versäubertes, vorgeröstetes, gefülltes Sandwich (80') resultiert, wobei das Abtrennen insbesondere durch Stanzen erfolgt.

9. Verfahren nach einem der vorherigen Ansprüche
**dadurch gekennzeichnet, dass**
das Verbinden der Sandwichscheiben (14', 14", 14b', 14b", 14c', 14c") mittels Hitze und Druck (G) und ein optionales Abtrennen äußerster, unsauberer Ränder (H) getaktet erfolgt während vorgängige Arbeitsschritte (A, B, C, D, E) in kontinuierlichem Verfahren durchgeführt werden, wobei die Sandwiches (34) für die getakteten Arbeitschritte vom Förderband (16, 16') weg in Gruppen (3) zusammengefasst werden (F) und von Manipulatoren (120a, 120b, 120c, 120d) übernommen werden und den getaktet arbeitenden Arbeitsstationen (58, 60', 90, 110) im Takt zugeführt bzw. von diesen wegtransportiert werden.

10. Anlage zum industriellen Herstellen eines gefüllten Sandwiches (34, 80, 80') mit wenigstens einem Magazin (10) zum kompakten Lagern von Sandwichscheiben (14, 14a, 14', 14", 14b', 14b", 14c', 14c"), mit einem Förderband (16, 16') auf welches die Sandwichscheiben (14, 14a, 14', 14", 14b', 14b", 14c', 14c") vereinzelt ablegbar sind, einer Sortier- und Ausrichtstation (18, 60, 60'), wenigstens einer Zutatenstation (30, 30') zum Zuführen wertbestimmender Zutaten (26) und einer Zusammenklappstation (32, 32') zum übereinanderlegen zweier Sandwichscheiben (14, 14a, 14', 14", 14b', 14b", 14c', 14c") mit wenigstens einer Zutat (26) dazwischen, wobei die Sortier- und Ausrichtstation (60, 60') folgendes umfasst:
• eine Lichtquelle (62), die auf einer Seite, vorzugsweise unterhalb des Förderbands (16, 16') angeordnet ist, und
• wenigstens einen optischen Detektor (64), der auf der anderen Seite des Förderbands und beabstandet zu diesem, vorzugsweise der Lichtquelle gegenüber angeordnet ist, und
• eine Auswerte- und Steuerungssoftware zur Erkennung von Position und Art einer Sandwichscheibe (14, 14a, 14', 14", 14b', 14b", 14c', 14c") und
• einen Greifer (67) zum Aussortieren unbrauchbarer Sandwichscheiben (14a) und zum Ablegen von Sandwichscheiben (14', 14", 14b', 14b", 14c', 14c") auf dem Förderband in geordneter und ausgerichteter Weise.

11. Anlage nach Anspruch 10,
**gekennzeichnet durch**
eine Druckröststation (90), welche zur Herstellung eines vorgerösteten, gefüllten Sandwiches (80, 80') dient und
welche zwei einander gegenüberliegende beheizbare und relativ zueinander bewegbare Pressplatten (91a, 91b) mit einer Anzahl Pressheizplätze (92) aufweist, wobei die Pressheizplätze (92) wenigstens in einer der Pressplatten (91a, 91b), einen zentralen Bereich mit einer Vertiefung (95) aufweist, die der Aufnahme eines zentralen, mit Zutaten bestückten Bereichs eines Sandwiches (34) dient.

12. Anlage nach Anspruch 11,
**dadurch gekennzeichnet, dass**
die Pressheizplätze (92) in Form von Schablonen (93) ausgebildet sind, die auswechselbar in oder an den Pressplatten (91a, 91b) befestigbar sind und vorzugsweise aus Teflon gefertigt sind, wobei die Schablonen insbesondere Muster (94) in den Vertiefungen (95) aufweisen und/oder zwei nebeneinander um eine Vertiefung (95) umlaufende von der Schablone abstehende linienartige Prägeelemente, die während eines Druckröstens (G) im Randbereich eines einzulegenden Sandwiches zu liegen kommen.

13. Anlage nach einem der Ansprüche 11 oder 12, **dadurch gekennzeichnet, dass**
eine Stanzstation 110 vorgesehen ist, welche entweder in die Druckstation integriert ist oder dieser nachgeordnet ist, und die einen an die Größe und Geometrie der vorgerösteten, gefüllten Sandwiches (80, 80') angepassten Stanzrahmen (112) und eine Anpressplatte (113) aufweist, die relativ zueinander bewegbar sind, wobei der Stanzrahmen (112) derart gegen die Anpressplatte (113) und ein zwischen dem Stanzrahmen (112) und der Anpressplatte (113) einlegbares, vorgeröstetes, gefülltes Sandwich (80, 80") bewegbar ist, dass der äußerte Rand des vorgerösteten, gefüllten Sandwich (80, 80') durch diese Bewegung abtrennbar ist.

14. Anlage nach einem der Ansprüche 11 bis 13
**dadurch gekennzeichnet, dass**
wenigstens ein Manipulator (120a, 120b, 120c, 120d) vorgesehen ist, mit dessen Hilfe zusammengestellte Sandwiches (34) von einer kontinuierlichen Verarbeitung am Förderband (16, 16') in ein getaktetes Verfahren zumindest an der Druckstation (90) überführbar und dort handhabbar sind sowie allenfalls in eine weitere kontinuierliche förderbandgestütze Verarbeitung überführbar sind, wobei der wenigstens eine Manipulator (120a, 120b, 120c, 120d) über eine Anzahl Greifschieneneinheiten (122) mit je zwei einander gegenüberliegenden Greifschienenpaaren (123, 123') verfügt, und wobei jedes Greifschienenpaar (123, 123') zwei Profilschienen (124a, 124b) aufweist, die um eine Schwenkachse (125) verschwenkbar gelagert sind, die Schwenkachsen (125) sind an oder in einer Halterung (126) gelagert, welche etwa senkrecht von einer gemeinsamen Befestigungstrebe (128) abstehen.

## Claims

1. Method for the industrial production of filled sandwiches (34, 80, 80') comprising two sandwich slices (14, 14', 14", 14b', 14b", 14c', 14c") and at least one value-determining ingredient (26), the method comprising the following steps:
• (A) separate sandwich slices (14, 14', 14", 14b', 14b", 14c', 14c") and place them on a conveyor belt (16),
• (B) sort out unusable sandwich slices (14a) and align remaining sandwich slices (14, 14', 14", 14b', 14b", 14c', 14c") for further processing,
• (C) provide each first sandwich slice (14', 14b', 14c') with at least one slice-shaped (26), granular, pasty or liquid ingredient,
• (E) apply a second sandwich slice (14", 14b", 14c") to each first sandwich slice (14', 14b', 14c') provided with at least one ingredient (26), thereby forming a sandwich (34), wherein
• for sorting out and aligning (B) the sandwich slices (14, 14', 14", 14b', 14b", 14c', 14c"), the conveyor belt (16) is transilluminated so that the light which penetrates the conveyor belt (16) is detected by optical detectors (64), and
• unusable sandwich slices (14a) and sandwich slices (14b', 14b", 14c', 14c") of similar geometry are detected and their position on the conveyor belt (16) is determined via brightness differences and/or color differences and their local distribution; and
• at least one gripper (67), due to the information about the type and position of the sandwich slices (14, 14a, 14', 14", 14b', 14b", 14c', 14c"), is controlled so that it sorts out the unusable sandwich slices (14a),
• and deposits two respective sandwich slices (14b', 14b", 14c', 14c") of similar geometry on a conveyor belt (16, 16'), namely in pairs associated with each other.

2. Method according to claim 1, **characterized in that** the depositing on the conveyor belt (16, 16') and the attribution of geometrically similar sandwich slices (14b', 14b", 14c', 14c") to each other in pairs takes place such that when turning over the respective second sandwich slice (14", 14b", 14c") by 180° and placing them on the respectively associated first sandwich slice (14', 14b', 14c'), both sandwich slices (14', 14", 14b', 14b", 14c', 14c") are geometrically approximately congruent to each other.

3. A method according to claim 1 or 2, **characterized in that** the depositing of a respective second sandwich slice (14", 14b", 14c") on a respectively attributed first sandwich slice (14', 14b', 14c') takes place by turning over the respective second sandwich slice (14", 14b", 14c") by 180° and placing said slice on the respectively associated first sandwich slice (14', 14b', 14c'), namely in that the respective second sandwich slice (14", 14b", 14c") is sucked by means of negative pressure on a suction nozzle (72) of a derailleur (71), which derailleur (71) is pressurisable with a negative pressure, and is initially moved away from the conveyor belt (16, 16'), wherein the derailleur (71) performs a pivoting movement of about 180°, in particular a pivoting movement in the range of 140° to 200°, wherein the second sandwich slice (14", 14b", 14c") is again moved at the end of the pivoting movement towards the attributed first sandwich slice (14', 14b', 14c') which is transported on the conveyor belt (16, 16') and, by abolition of the negative pressure, is finally deposited on said first sandwich slice (14', 14b', 14c'), wherein the suction of the second sandwich slice (14", 14b", 14c"), the pivoting of the derailleur (71) and the abolition of the negative pressure are adjusted in their speed to the conveying speed of the conveyor belt (16, 16').

4. Method according to one of the preceding claims, **characterized in that**
• sandwich slices (14', 14", 14b', 14b", 14c', 14c"), after they have been assembled into a sandwich (34) (E), are firmly and liquid-tightly connected (G) in their edge regions by applying pressure and heat, resulting in a pre-roasted filled sandwich (80), wherein the edge region surrounds the central region of a sandwich (34, 80, 80') provided with at least one ingredient (26).

5. A method according to claim 4, **characterized in that**
• pressure and temperature are applied for less than 40s, in particular 10s to 20s, and preferably for 15s to 16s, wherein
• the pressure is between 10 kg/cm2 and 40 kg/cm2 and in particular within a range of 20 kg/cm2 to 30 kg/cm2, and
• the temperature is in the range of 160°C to 220°C, in particular in the range of 180°C to 200°C.

6. A method according to claim 4 or 5, **characterized in that** two spaced-apart circumferential lines are subjected to higher pressure in the edge regions, so that in the connected edge region two circumferential lines of firmer connection and higher density are obtained adjacent to each other around the central region of the sandwich.

7. Method according to one of claims 4 to 6, **characterized in that**
• before applying pressure and heat to the edge region (G)
• the first and second sandwich slices (14', 14", 14b', 14b", 14c', 14c") are each provided with a food-compatible binder (54) in each case in the region of their edges on the side which is oriented in the finished sandwich (34) towards the sandwich interior (D), wherein the food-compatible binder is in particular a protein, which is sprayed in the form of an aqueous protein solution along the edge regions.

8. Method according to one of claims 4 to 7, **characterized in that** the outermost, lacerated edges of a pre-roasted, filled sandwiches (80) are severed (H), so that a cleansed, pre-roasted, filled sandwich (80') results, wherein the severing is carried out in particular by punching.

9. Method according to one of the preceding claims, **characterized in that** the bonding of the sandwich slices (14', 14", 14b', 14b", 14c', 14c") by means of heat and pressure (G) and an optional severing of outermost, lacerated edges (H) takes place in a clocked manner, whereas previous operations (A, B, C, D, E) are carried out in a continuous process, wherein the sandwiches (34) are joined (F) away from the conveyor belt (16, 16') into groups (3) for the clocked working steps and are taken over by manipulators (120a, 120b, 120c, 120d) and are in a clocked manner supplied to or are transported away from the working stations (58, 60', 90, 110) that are operating in a clocked manner .

10. Plant for the industrial production of a filled sandwich (34, 80, 80'), having at least one magazine (10) for compact storage of sandwich slices (14, 14a, 14', 14", 14b', 14b", 14c', 14c"), a conveyor belt (16, 16') on which the sandwich slices (14, 14a, 14', 14", 14b', 14b", 14c', 14c") are storable individualised, a sorting and alignment station (18, 60, 60'), at least one ingredient station (30, 30') for feeding value-determining ingredients (26) and a folding station (32, 32') for superposing two sandwich slices (14, 14a, 14', 14", 14b', 14b", 14c', 14c") having at least one ingredient (26) therebetween, wherein the sorting and alignment station (60, 60') comprises:
• a light source (62) disposed on one side, preferably below the conveyor belt (16, 16'), and
• at least one optical detector (64) disposed on the other side of the conveyor belt and spaced therefrom, preferably opposite the light source, and
• an evaluation and control software for detecting the position and type of a sandwich slice (14, 14a, 14', 14", 14b', 14b", 14c', 14c"), and
• a gripper (67) for sorting out useless sandwich slices (14a) and depositing sandwich slices (14', 14", 14b', 14b", 14c', 14c") on the conveyor belt in an ordered and aligned manner.

11. Plant according to claim 10, **characterized by** a pressure roasting station (90) which serves to produce a pre-roasted, filled sandwich (80, 80') and
which has two opposely disposed, heatable pressure plates (91a, 91b) which are movable relative to each other and comprise a number of pressure heating places (92), wherein the pressure heating places (92) have, at least in one of the pressing plates (91a, 91b), a central area with a recess (95) which serves to accommodate a central portion of a sandwich (34) provided with ingredients.

12. Plant according to claim 11, **characterized in that** the pressure heating places (92) are designed in the form of templates (93), which can be fastened in an interchangeable manner in or on the press plates (91a, 91b) and are preferably made of Teflon, wherein the templates comprise in particular patterns (94) in the recesses (95) and/or two line-like embossing elements which are arranged adjacent to each other and around the recess (95), projecting from the template and coming to lie in the edge region of a sandwich to be inserted during pressure roasting (G).

13. Plant according to one of claims 11 or 12, **characterized in that** a punching station 110 is provided, which is either integrated in the pressure roasting station or is arranged downstream thereof, and which comprises a punching frame (112), which is adapted to the size and geometry of the pre-roasted, filled sandwiches (80, 80'), and a pressure plate (113), which are movable relative to each other, wherein the punching frame (112) is movable against the pressure plate (113) and a pre-roasted, filled sandwich (80, 80') insertable between the punching frame (112) and the pressure plate (113) such that the outermost edge of the pre-roasted, filled sandwich (80, 80') can be severed by this movement.

14. Plant according to one of claims 11 to 13, **characterized in that** at least one manipulator (120a, 120b, 120c, 120d) is provided, with the aid of which assembled sandwiches (34) can be transferred from continuous processing on the conveyor belt (16, 16') into a clocked processing at least at the pressure roasting station (90) and handled there, and can be transferred optionally into further continuous conveyor belt-supported processing, wherein the at least one manipulator (120a, 120b, 120c, 120d) comprises a number gripper rail units (122) with two mutually opposite gripping rail pairs (123, 123') each, and wherein each gripping rail pair (123, 123') has two profiled rails (124a, 124b) which are pivotally mounted about a pivot axis (125), the pivot axes (125) are mounted on or in a mount (126), which protrude approximately perpendicularly from a common fastening strut (128).

## Revendications

1. Procédé de fabrication industrielle de sandwichs garnis (34, 80, 80') comprenant deux tranches de sandwich (14, 14', 14", 14b', 14b", 14c', 14c") et au moins un ingrédient déterminant la valeur (26), le procédé comprenant les étapes suivantes consistant à :
- (A) séparer les tranches de sandwich (14, 14a, 14', 14", 14b', 14b", 14c', 14c") les unes des autres et les placer sur une bande transporteuse (16),
- (B) mettre à part les tranches de sandwich inutilisables (14a) et aligner les tranches de sandwich restantes (14, 14', 14", 14b', 14b", 14c', 14c") pour la suite du traitement,
- (C) munir chaque première tranche de sandwich (14', 14b', 14c') d'au moins un ingrédient granulaire, pâteux ou liquide ou en forme de tranche (26),
- (E) poser une deuxième tranche de sandwich (14", 14b", 14c") sur chaque première tranche de sandwich (14', 14b', 14c') munie d'au moins un ingrédient (26), ce dont il résulte un sandwich (34),
dans lequel
- pour mettre à part et aligner (B) les tranches de sandwich (14, 14', 14", 14b', 14b", 14c', 14c"), la bande transporteuse (16) est éclairée par transparence de telle sorte que la lumière qui traverse la bande transporteuse (16) est détectée par des détecteurs optiques (64), et
- les tranches de sandwich inutilisables (14a) et les tranches de sandwich (14b', 14b", 14c', 14c") de géométrie similaire sont détectées et leur position sur la bande transporteuse (16) déterminée par des différences de luminosité et/ou de couleur et leur distribution locale ; et
- au moins une pince (67) est commandée sur la base d'informations sur le type et la position des tranches de sandwich (14, 14a, 14', 14", 14b', 14b", 14c', 14c") de telle sorte qu'elle met à part les tranches de sandwich (14a) inutilisables
- et dépose chaque fois deux tranches de sandwich (14b', 14b", 14c', 14c") de géométrie similaire sur une bande transporteuse (16, 16') en les associant par paires.

2. Procédé selon la revendication 1,
**caractérisé en ce que**
le dépôt sur la bande transporteuse (16, 16') et l'association par paires de tranches de sandwich de géométrie similaire (14b', 14b", 14c', 14c") sont réalisés de telle sorte qu'après rabattement de la deuxième tranche de sandwich respective (14", 14b", 14c") de 180° et placement de celle-ci sur la première tranche de sandwich (14', 14b', 14c') respectivement associée, les deux tranches de sandwich (14', 14", 14b', 14b", 14c', 14c") se trouvent géométriquement à peu près en coïncidence l'une sur l'autre.

3. Procédé selon la revendication 1 ou 2,
**caractérisé en ce que**
le dépôt d'une deuxième tranche de sandwich respective (14", 14b", 14c") sur une première tranche de sandwich (14', 14b', 14c') respectivement associée est réalisé en rabattant la deuxième tranche de sandwich (14", 14b", 14c") respective de 180° et en la plaçant sur la première tranche de sandwich (14', 14b', 14c') respectivement associée, à savoir en aspirant la deuxième tranche de sandwich (14", 14b", 14c") respective par dépression à un orifice d'aspiration (72) d'un renverseur (71) pouvant être soumis à une dépression et en l'éloignant d'abord de la bande transporteuse (16, 16'), le renverseur (71) effectuant un mouvement pivotant d'environ 180°, en particulier un mouvement pivotant dans la plage de 140° à 200°, la deuxième tranche de sandwich (14", 14b", 14c") étant, à la fin du mouvement pivotant de nouveau déplacée sur la bande transporteuse (16, 16') et sur la première tranche de sandwich (14', 14b', 14c') associée transportée sur la bande transporteuse (16, 16') et, par suppression de la dépression, finalement déposée sur ladite première tranche de sandwich (14', 14b', 14c'), la vitesse de l'aspiration de la deuxième tranche de sandwich (14", 14b", 14c"), du pivotement du renverseur (71) et de la suppression de la dépression étant coordonnée avec la vitesse de transport de la bande transporteuse (16, 16').

4. Procédé selon l'une des revendications précédentes,
**caractérisé en ce**
- **qu'**après avoir été réunies (E) pour former un sandwich (34), les tranches de sandwich (14', 14", 14b', 14b", 14c', 14c") sont assemblées solidement et de manière étanche aux liquides (G) dans leurs zones de bordure en appliquant une pression et de la chaleur, de sorte qu'il en résulte un sandwich prégrillé et garni (80), la zone de bordure entourant la zone centrale d'un sandwich (34, 80, 80') munie d'au moins un ingrédient (26).

5. Procédé selon la revendication 4,
**caractérisé en ce que**
- la pression et la température sont appliquées pendant moins de 40 secondes, en particulier pendant 10 à 20 secondes et de préférence pendant 15 à 16 secondes,
- la pression étant comprise entre 10 kg/cm² et 40 kg/cm² et en particulier située dans une plage de 20 kg/cm² à 30 kg/cm², et
- la température se situant dans la plage de 160 °C à 220 °C, en particulier dans la plage de 180 °C à 200 °C.

6. Procédé selon la revendication 4 ou 5,
**caractérisé en ce que**
dans la zone de bordure, deux lignes périphériques espacées l'une de l'autre sont soumises à une pression plus élevée, de sorte qu'il en résulte dans la zone de bordure assemblée deux lignes périphériques de liaison plus forte et de plus étanchée autour de la zone centrale du sandwich.

7. Procédé selon l'une des revendications 4 à 6,
**caractérisé en ce**
- **qu'**avant d'appliquer la pression et la chaleur sur la zone de bordure (G),
- les premières et deuxièmes tranches de sandwich (14', 14", 14b', 14b", 14c', 14c") sont munies (D) d'un liant alimentaire (54), chaque fois sur le côté qui est orienté vers l'intérieur du sandwich dans le sandwich fini (34) et chaque fois dans la zone de leurs bords, le liant alimentaire étant en particulier une protéine qui est pulvérisée le long des zones de bordure sous la forme d'une solution aqueuse de protéine.

8. Procédé selon l'une des revendications 4 à 7,
**caractérisé en ce que**
les bords extérieurs non propres d'un sandwich prégrillé et garni (80) sont séparés (H), de sorte que l'on obtient un sandwich (80') prégrillé, garni et propre, la séparation étant réalisée en particulier par découpage.

9. Procédé selon l'une des revendications précédentes,
**caractérisé en ce que**
l'assemblage des tranches de sandwich (14', 14", 14b', 14b", 14c', 14c") est réalisé au moyen de la chaleur et de la pression (G) et une séparation optionnelle des bords extérieurs non propres (H) est réalisée de manière cadencée tandis que les étapes de travail précédentes (A, B, C, D, E) sont réalisées dans un procédé continu, les sandwichs (34) étant rassemblés (F) en groupes (3) à l'écart de la bande transporteuse (16, 16') pour les étapes de travail cadencées, pris en charge par des manipulateurs (120a, 120b, 120c, 120d) et transportés de manière cadencée vers ou depuis les postes de travail travaillant en cadence (58, 60', 90, 110).

10. Installation de fabrication industrielle d'un sandwich garni (34, 80, 80'), comportant au moins un magasin (10) pour le stockage compact de tranches de sandwich (14, 14a, 14', 14", 14b', 14b", 14c', 14c"), une bande transporteuse (16, 16') sur laquelle les tranches de sandwich (14, 14a, 14', 14", 14b', 14b", 14c', 14c") peuvent être déposées individuellement, une station de tri et d'alignement (18, 60, 60'), au moins une station d'ingrédients (30, 30') pour fournir des ingrédients déterminant la valeur (26) et une station de rabattement (32, 32') pour superposer deux tranches de sandwich (14, 14a, 14', 14", 14b', 14b", 14c', 14c") munies d'au moins un ingrédient (26) entre elles,
dans laquelle
la station de tri et d'alignement (60, 60') comprend les éléments suivants :
- une source de lumière (62) disposée d'un côté, de préférence sous la bande transporteuse (16, 16'), et
- au moins un détecteur optique (64) disposé de l'autre côté de la bande transporteuse et à distance de celle-ci, de préférence en face de la source de lumière, et
- un logiciel d'évaluation et de commande pour détecter la position et le type d'une tranche de sandwich (14, 14a, 14', 14", 14b', 14b", 14c', 14c") et
- une pince (67) pour mettre à part les tranches de sandwich inutilisables (14a) et pour déposer les tranches de sandwich (14', 14", 14b', 14b", 14c', 14c") sur la bande transporteuse d'une manière ordonnée et alignée.

11. Installation selon la revendication 10,
**caractérisée par**
une station de grillage sous pression (90) qui sert à fabriquer un sandwich prégrillé et garni (80, 80') et qui présente des plaques de pressage (91a, 91b) opposées l'une à l'autre, chauffantes et déplaçables l'une par rapport à l'autre, qui comportent un certain nombre d'emplacements de chauffage sous pression (92), les emplacements de chauffage sous pression (92) présentant, au moins dans l'une des plaques de pressage (91a, 91b), une zone centrale avec un évidement (95) qui sert à recevoir une zone centrale munie d'ingrédients d'un sandwich (34).

12. Installation selon la revendication 11,
**caractérisée en ce que**
les emplacements de chauffage sous pression (92) sont réalisés sous la forme de gabarits (93) qui peuvent être fixés de manière interchangeable dans ou sur les plaques de pressage (91a, 91b) et sont de préférence fabriqués en Téflon, les gabarits présentant en particulier des motifs (94) dans les évidements (95) et/ou deux éléments de gaufrage linéaires périphériques qui font saillie du gabarit autour d'un évidement (95) et qui se trouvent dans la zone de bordure d'un sandwich à insérer pendant un grillage sous pression (G).

13. Installation selon l'une des revendications 11 ou 12,
**caractérisée en ce**
**qu'**il est prévu une station de découpage 110 qui est soit intégrée dans la station de pression, soit disposée en aval de celle-ci, et qui présente un cadre de découpage (112) adapté à la taille et à la géométrie des sandwichs prégrillés et garnis (80, 80') et une plaque de pression (113) qui sont mobiles l'un par rapport à l'autre, le cadre de découpage (112) étant mobile par rapport à la plaque de pression (113) et un sandwich prégrillé garni (80, 80') qui peut être inséré entre le cadre de découpage (112) et la plaque de pression (113) de telle sorte que le bord extérieur du sandwich prégrillé garni (80, 80') peut être séparé par ce mouvement.

14. Installation selon l'une des revendications 11 à 13,
**caractérisée en ce**
**qu'**il est prévu au moins un manipulateur (120a, 120b, 120c, 120d) à l'aide duquel des sandwichs assemblés (34) peuvent être transférés d'un traitement continu sur la bande transporteuse (16, 16') à un procédé cadencé au moins sur la station de grillage sous pression (90) et peuvent y être manipulés et, si nécessaire, être transférés vers un autre traitement continu assisté par bande transporteuse, dans laquelle ledit au moins un manipulateur (120a, 120b, 120c, 120d) dispose d'un certain nombre d'unités de barres de préhension (122) dotées chacune de deux paires de barres de préhension opposées (123, 123'), et dans laquelle chaque paire de barres de préhension (123, 123') présente deux barres profilées (124a, 124b) montées de manière pivotante autour d'un axe de pivotement (125), les axes de pivotement (125) étant montés sur ou dans un support (126) qui fait saillie à peu près verticalement d'une traverse de fixation commune (128).
